(19) Europäisches Patentamt
European Patent Office
Office européen des brevets

(11) **EP 2 582 192 A1**

(12) **EUROPEAN PATENT APPLICATION**

(43) Date of publication:
**17.04.2013 Bulletin 2013/16**

(51) Int Cl.:
***H04W 72/04*** *(2009.01)* *H04W 72/12* *(2009.01)*

(21) Application number: **11306323.4**

(22) Date of filing: **12.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Alcatel Lucent**
**75007 Paris (FR)**
• **SocioSpace Solutions Inc.**
**Kingston, ON K7P 1S7 (CA)**

(72) Inventors:
• **Hatem, Abou-zeid**
**70190 Stuttgart (DE)**

• **Valentin, Stefan**
**70378 Stuttgart (DE)**
• **Hassanein, Hossam**
**Kingston, Ontario K7P 1S7 (CA)**

(74) Representative: **2SPL Patentanwälte**
**Postfach 15 17 23**
**80050 München (DE)**

Remarks:
Amended claims in accordance with Rule 137(2) EPC.

(54) **Apparatuses, methods, and computer programs for a mobile transceiver and for a base station transceiver**

(57) Embodiments provide apparatuses, methods, and computer programs for a mobile transceiver 100 and for a base station transceiver 200. The apparatus 10 for the mobile transceiver 100 comprises means for determining 12, 12a, 12b information on a data amount of a data service. The information refers to a time interval during which the mobile transceiver 100 communicates data associated with the data service to one or more base station transceivers. The apparatus 10 comprises means for transmitting 14 the information to the base station transceiver 200. The base station transceiver apparatus 20 comprises means for determining 22 information on a data amount of a data service and means for allocating 24 radio resources to the mobile transceiver 100 based on the information.

Fig. 1

EP 2 582 192 A1

**Description**

Embodiments of the present invention relate to communication networks, more particularly but not exclusively to packet data transmission in mobile communication networks.

<u>Background</u>

Demands for higher data rates for mobile services are steadily increasing. At the same time modern mobile communication systems as 3rd generation systems (3G as abbreviation) and 4th generation systems (4G as abbreviation) provide enhanced technologies which enable higher spectral efficiencies and allow for higher data rates and cell capacities. Users of today's handhelds become more difficult to satisfy. Mobile operators experience an explosion in data traffic, driven by large-screen devices (such as Smartphones, Tablets and Netbooks) and the growth of online media streaming, cf. G. Maier, F. Schneider, and A. Feldmann, "A First Look at Mobile Hand-held Device Traffic," Passive and Active Measurement, Lecture Notes in Computer Science, vol. 6032, pp. 161-170, 2010.

For wireless networks this results in several challenges, which are due to the high network load. One challenge is to cope with the high load without sacrificing the users' Quality of Experience (QoE) using the limited wireless capacity, cf. U. Paul, A. P. Subramanian, M. M. Buddhikot, and S. R. Das, "Understanding traffic dynamics in cellular data networks," INFOCOM, 2011 Proceedings IEEE, pp.882-890, April 2011. Another challenge is the uneven traffic distribution as network traffic is becoming more unevenly distributed in space and time with high demand peaks moving across different cells at different times of the day. This imbalanced load makes it difficult to serve users in a fair manner.

Radio Resource Management (RRM) techniques in wireless networks tackle the above problems by controlling system level parameters such as transmit power, modulation order, coding rate, allocated Physical Resource Blocks (PRBs), and admission control. As a part of these adaptation functions, Resource Allocation (RA) aims to efficiently assign the network resources, e.g., Physical Resource Blocks, to the users. The challenge herein is the efficient tradeoff between maximizing network capacity, satisfying users' QoE, maintaining fair allocations among users, and minimizing interference at the cell edges, cf. Z. Han and K.J. Ray Liu, "Resource Allocation for Wireless Networks", Cambridge University Press, 2008. In cellular networks, RA schemes can be categorized into intra-cell and inter-cell RA. In intra-cell RA, the resources of each cell are allocated independently of other cells. One simple example is the Proportional Fair scheduler running at the Base Station (BS), cf. P. Viswanath, D.N.C. Tse, and R. Laroia, "Opportunistic beamforming using dumb antennas," IEEE Trans. Inform. Theory, vol.48, no.6, pp.1277-1294, June 2002. Resource allocation is performed at each BS where a subset of resource blocks is assigned to a subset of active users at every time frame, e.g., every Transmission Time Interval (TTI) in 3GPP systems.

The essence of the allocation is Channel Aware Scheduling (CAS), which enables the BS to increase system throughput by delaying the transmission of a user until its channel is relatively strong compared to average conditions, cf. Viswanath et al. Several variants of this approach exist that serve the users of a single cell under different fairness constraints and satisfy QoS demands of different users or of different applications, cf. P. Marsch (ed.) and G. Fettweis (ed.), "Coordinated Multi-Point in Mobile Communications: From Theory to Practice", Cambridge University Press, 2011, F. Kelly, "Charging and rate control for elastic traffic", Euro. Trans. Telecomms., vol. 8, pp. 33-37, 1997, and W. Park, S. Cho, and S. Bahk, "Scheduler Design for Multiple Traffic Classes in OFDMA Networks," Proc. IEEE Int. Conf. Communications, vol. 2, pp. 790-795, 2006.

Inter-cell RA, however, couples the allocation among neighboring cells. Here, multiple cells cooperate to make the RA decisions. One example is Coordinated Beamforming/Coordinated Scheduling used in Coordinated Multi-Point systems, section 14.4 of Marsch et al. An existing solution for inter-cell RA is joint transmission from more than one BS to more than one user within the same PRB. This is the typical case of distributed Multiple Input Multiple Output (MIMO) or distributed Beamforming in coordinated multi-point systems, cf. section 5 of Marsch et al. Network capacity gains result from spatial multiplexing, spatial diversity, or interference coordination. Another approach is using joint scheduling decisions among several BSs to perform coordinated beamforming, cf. section 14.4 of Marsch et al. Network capacity gains result from decreased interference at the cell edge, cf. section 5.2 of Marsch et al. Another concept is joint user-BS assignments to distribute the load as evenly as possible, cf. A. Sang, X. Wang, M. Madihian, and R. D. Gitlin, "Coordinated load balancing, handoff/cell-site selection, and scheduling in multi-cell packet data systems," Proc. Mobi-Com, pp. 302—314, Sept. 2004. Gains result from a lower request to demand ratio per cell and, thus, from balancing overloaded cells. Joint scheduling and user-BS assignments have been considered to achieve simultaneous interference-aware scheduling and load balancing in K. Laasonen, "Route prediction from cellular data," Proc. Workshop on Context Awareness for Proactive Systems (CAPS), pp. 147-158, 2005.

<u>Summary</u>

Embodiments are based on the finding that current intra-cell RA schemes operate at the individual cells and, thus, cannot achieve a globally optimal resource allocation over the full cellular network. Furthermore, current inter-cell RA schemes cooperate but only follow short-term objectives, making resource allocations once per TTI. In 3GPP systems, this leads to a new allocation every time slot, e.g. every millisecond (ms). Due to this short-term perspective and due to not exploiting predictions of traffic and mobility parameters, existing schemes do not exploit long-term predictions of user locations or of application demands in their allocation strategies. It is a further finding, these user predictions provide information on the spatial and temporal statistics of future load and can be used to significantly improve the network-wide performance.

It is a further finding that conventional systems do not allow BSs to exchange information on how users were previously served, or how they will be served. Exchanging such information enables to match the resource allocation to the spatially unevenly distributed load and can assure long-term fairness even when users change the cell. It is a further finding that shortcomings become more relevant in cellular networks. Mobile users expect continuous service on their way even for long sessions such as web surfing and video streaming. Moreover, cells keep shrinking in size, which will decrease the service-time each user experiences per cell. Due to these changes in network structure and use, users will have more and more sessions that extend over multiple cells. This makes long-term inter-cell fairness and load balancing among the cells more relevant.

Embodiments may enable an inter-cell RA to cope with high, unevenly distributed network load under limited wireless channel resources. Embodiments may use long-term resource allocations among multiple cells, based on predictions of users' locations and application demands and/or based on information from the past, e.g. on an average data rate users experienced in the past when being served by other cells.

Embodiments are based on the finding that prediction of user locations and application demands can be carried out by monitoring historical movement patterns and application usage. Moreover, long-term resource allocation among multiple base stations can be integrated into traditional schedulers. Furthermore, signaling of the predictions and allocation decisions between the cooperating BSs can be achieved by an efficient protocol that signals the above information via the backhaul and via the air-interface.

Embodiments may provide a resource allocation framework that may be completely or partially used to make long-term resource allocations over multiple BS based on predictions of user movement and application usage, data history, respectively.

More specifically, embodiments may provide an apparatus for a mobile transceiver in a mobile communication system, i.e. embodiments may provide said apparatus to be operated by or included in a mobile transceiver. In the following, the apparatus will also be referred to as mobile relay station transceiver apparatus. The mobile communication system further comprises a base station transceiver.

The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), a Global System for Mobile Communication (GSM) or Enhanced Data Rates for GSM Evolution (EDGE) network, a GSM/EDGE Radio Access Network (GERAN), Long-term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA), etc. In the following the terms mobile communication system and mobile communication network are used synonymously.

In embodiments a base station transceiver may operate one or more cells, i.e. provide radio signals to the mobile transceivers, which establish one or more cells. The term cell refers to a coverage area of radio services provided by a base station transceiver. A base station transceiver may operate multiple cells, in some embodiments a cell may correspond to a sector. For example, sectors can be achieved using sector antennas, which provide a characteristic for covering an angular section around a base station transceiver. In some embodiments, a remote unit may, for example, operate three or six cells covering sectors of 120° (in case of three cells), 60° (in case of six cells) respectively. A mobile transceiver can be registered with a cell, i.e. it can be associated to a cell or base station transceiver such that data can be exchanged between the network and the mobile in the coverage area of the associated cell. A cell is thus operated by a base station transceiver and can be seen as a coverage area, which can be identified through reference or broadcast channels with a respective identification, as, for example, the Common PIlot CHannel (CPICH) in UMTS.

The mobile transceiver apparatus comprises means for determining information on a data amount of a data service, the information referring to a time interval during which the mobile transceiver communicates data associated with the data service to one or more base station transceivers. The apparatus further comprises means for transmitting the information to the base station transceiver. In other words, the apparatus determines information on a data state of the data service during a time interval. The time interval can be in the past, in the future or both, i.e. the time interval can extent from the past to the present and on to the future. The state of the data service may correspond to a data rate, i.e. an average data rate the service or the mobile transceiver achieved during the time interval. When the time interval extends to the future the means for determining can be adapted to predict such information.

In embodiments the means for determining can be adapted to predict a future data demand. The means for determining can be further adapted to predict a future location of the mobile transceiver. The means for transmitting can be adapted to communicate information on the future data demand and/or on the future location to the base station transceiver. The means for determining can be adapted to provide a new prediction per prediction interval, and the time interval may refer to a prediction window. The prediction window can be longer than the prediction interval, i.e. time span of the prediction window can be wider than the time span of the prediction interval.

In embodiments the means for determining can be adapted to predict a future location of the mobile transceiver in terms of one or more base station transceivers to which the mobile transceiver will associate. In other words, the means for determining may determine one or more base station transceivers along the path of the mobile transceiver. The mobile transceiver apparatus may then use the means for transmitting to let the base station it is currently associated with know, which will likely be the future base stations on its way. As the base station can now foresee to which base stations the mobile transceiver is going to hand over to, the resource allocator at the base station can take into account a future load situation the mobile transceiver is going to be in with the present.

The means for determining can be adapted to base a prediction on stored information from the past. For example, the average data rate the mobile transceiver achieved during a certain time interval, which begins when the mobile transceiver was still associated with another base station transceiver can be considered by the current base station transceiver. For example, inter-cell proportional fair scheduling can be enabled. As compared to conventional systems, wherein a scheduling metric was reset when a hand over occurred, in embodiments the mobile transceiver can be enabled to take its scheduling status, e.g. in terms of a priority, an average data rate, any scheduling metric developed with an old base station transceiver, etc. along to a new base station transceiver during hand over. Instead of having to compete with the other users in order to develop a new scheduling status, the mobile transceiver may continue developing its scheduling status from where it stopped at the old base station transceiver. The means for determining can be adapted to determine an average data rate during the time interval. The mobile transceiver can be associated to two or more base station transceivers during the time interval and the information on the data amount may correspond to the average data rate.

In embodiments, scheduling weights for an arbitrary user $j$ may be defined as

$$w_i = \frac{r_i}{R_{i,j}}$$

where $r_i$, is the instantaneous rate of user i in the current cell and $R_{i,j}$ is the rate history, e.g., computed as a moving average, when user i joined the current cell from cell j. Consequently, $R_{i,j}$ may include a rate history of the current and previous cells.

In other words, embodiments can be based on the finding that long-term and/or inter-cell resource allocation that spans several cells and time instances in the future can provide benefits in user QoE. Embodiments may therefore utilize a network architecture, RRM algorithms, functions for predicting traffic and mobility parameters, and a protocol for user-BS and inter-BS communication. The long-term RA decisions can be based on a user allocation or data history, i.e. how a user was served in one cell will impact how it will be served when it moves to neighboring cells. The long-term RA decisions can be based on prediction, i.e. inter-cell allocations can be made by using predictions of future user locations, as e.g. cell associations, future user application demands, as e.g. media streams or file downloads, and these predictions may be gathered from multiple cells.

Embodiments may therefore also provide an apparatus for a base station transceiver in a mobile communication system, i.e. embodiments may provide said apparatus to be operated by or included in a base station transceiver. In the following, the apparatus will also be referred to as base station transceiver apparatus. The mobile communication system can correspond to one of the above mentioned communication systems. The mobile communication system further comprises a mobile transceiver. The base station apparatus comprises means for determining information on a data amount of a data service, the information referring to a time interval during which the mobile transceiver communicates data associated with the data service to one or more base station transceivers. The base station transceiver apparatus further comprises means for allocating radio resources to the mobile transceiver based on the information.

In embodiments the means for determining can be adapted to receive the information on the data amount from the mobile transceiver and/or from another base station transceiver. In other words, such information may be determined by the mobile transceiver and transmitted to the base station transceiver or such information may be determined by another base station transceiver and forwarded to the present base station transceiver, e.g. using backhaul signaling. The information on the data amount may correspond to a future data demand of the mobile transceiver. In other embodiments, the means for determining of the base station transceiver apparatus can be adapted to predict a future data demand of the mobile transceiver based on an application being executed on the mobile transceiver. This may, for example, be carried out through packet inspection by the base station receiver. In yet another embodiment the base station transceiver may receive such information from a data server, which provides data to the mobile transceiver or on which a counter part of the application is executed, e.g. in a server-client manner.

In further embodiments the means for determining can be further adapted to receive information on a future location of the mobile transceiver from the mobile transceiver and the means for allocating can be adapted to allocate the radio resources to the mobile transceiver further based on the information on the future location. The means for allocating can be adapted to allocate more radio resources to the mobile transceiver when the future data demand will be higher than a serving capacity of base station transceivers at the future locations than when the future data demand will be lower than a serving capacity of base station transceivers at the future locations. The means for determining can be adapted to predict the future location of the mobile transceiver based on an application being executed on the mobile transceiver.

The information on the data amount may correspond to the average data rate of the mobile transceiver during the time interval. The mobile transceiver can be associated to two or more base station transceivers during the time interval. In other words, the time interval may extent across multiple hand overs, such that the information on the data amount reflects a service or data history. In some embodiments, the average data rate may be updated by each individual base station serving the mobile transceiver based on an average data rate from the past. For example, whenever the mobile transceiver hands over to a new base station transceiver, the old base station transceiver, where the mobile transceiver originated from, may transfer the average data rate to the new base station transceiver.

A base station transceiver may then implement a forgetting filter for updating the average data rate by adding a weighted current data rated to the weighted average data rate. The weights may then determine the relevant time interval, i.e. how long it takes, until a past data rate falls below a certain influence, e.g. 10% of the average data rate. The means for allocating can be adapted to allocate radio resources to the mobile transceiver further based on a resource allocation history or the average data rate of the mobile transceiver. That is to say, the means for allocating may allocate the radio resources to the mobile transceiver based on proportional fair scheduling, which can be based on the average data rate of the mobile transceiver, which it experienced, at least partly, when having been associated to another base station transceiver.

In embodiments the base station transceiver apparatus can further comprise means for communicating the information on the data amount, e.g. a resource allocation history, of the mobile transceiver with another base station transceiver. As it has also been described above, the base station transceiver may receive information on a resource allocation history, e.g. an average data rate, from another base station transceiver, for example, when the mobile transceiver hands over from the other base station transceiver to the base station transceiver. The base station transceiver may transmit information on a resource allocation history, e.g. an average data rate, to another base station transceiver, when the mobile transceiver hands over from the base station transceiver to the other base station transceiver.

In embodiments the base station transceiver apparatus can further comprise means for communicating with another base station transceiver. The means for communicating can be adapted to receive information on a future data demand of another mobile transceiver from the other base station transceiver. That is to say, one base station transceiver may inform another base station transceiver on the data demand the mobile transceiver is going to have prior to a hand over. The other base station transceiver can then evaluate how it is able to meet said data demand and in turn inform the base station transceiver, which can then consider this information in its scheduling or resource allocation decisions. For example, if the other base station transceiver is not able to meet the data demand, e.g. due to overload, the base station transceiver may prioritize the mobile transceiver and, for example, provide extra streaming data, which can be buffered at the mobile transceiver. Thus the mobile transceiver may not need the full service of the other base station transceiver as at least parts of its data demand have already been served and the data is buffered. If the other base station transceiver indicates that it has serving capabilities higher that the data demand of the mobile transceiver the base station transceiver may serve the mobile transceiver with a lower data rate than its actual data demand making the mobile transceiver use up the data in its buffer prior to handing over to the other base station transceiver.

Thus, the means for allocating radio resources can be adapted to determine an allocation of radio resources for the other mobile transceiver based on the future data demand of the other mobile transceiver. The other mobile transceiver may be associated to another base station transceiver. The means for communicating can be adapted to transmit information on the allocation of radio resources for the other mobile transceiver to the other base station transceiver. The means for communicating may be adapted to receive information on an allocation of radio resources for the mobile transceiver from the other base station transceiver. The means for allocating radio resources can be adapted to allocate the radio resources to the mobile transceiver based on the information on the allocation of radio resources for the mobile transceiver from the other base station transceiver. In embodiments, the base station transceiver may establish a long-term priority of the mobile transceiver, which considers the data history of the mobile transceiver, i.e. how it was served in the past, and its further data demand, i.e. how much more data it is going to need, where the long-term priority may span a time window, in which several hand overs may occur, i.e. which involves multiple base station transceivers.

In some embodiments, the means for allocating can be adapted to minimize a deviation between the future data demand and a future allocated data amount resulting from the radio resource allocations for a plurality of mobile transceivers within a prediction window. In other words, a base station transceiver may serve multiple mobile transceivers, for each of which information on a future data demand is available within a prediction window. When allocating the resources to the plurality of mobile transceivers, the means for allocating may try to minimize or optimize a deviation between said individual data demands and the actually served data based on the allocated radio resources.

Embodiments may further provide a mobile transceiver comprising the above mobile transceiver apparatus, a base station transceiver comprising the above base station transceiver apparatus, and/or a communication system comprising the mobile transceiver and/or the base station transceiver.

Embodiments further provide a method for a mobile transceiver in a mobile communication system. The mobile communication system further comprises a base station transceiver. The method comprises a step of determining information on a data amount of a data service. The information refers to a time interval during which the mobile transceiver communicates data associated with the data service to one or more base station transceivers. The method further comprises a step of transmitting the information to the base station transceiver.

Moreover, embodiments provide a method for a base station transceiver in a mobile communication system. The mobile communication system further comprises a mobile transceiver. The method comprises a step of determining information on a data amount of a data service. The information refers to a time interval during which the mobile transceiver communicates data associated with the data service to one or more base station transceivers. The method further comprises a step of allocating radio resources to the mobile transceiver based on the information.

Embodiments can further comprise a computer program having a program code for performing one of the above described methods when the computer program is executed on a computer or processor.

Brief description of the Figures

Some other features or aspects will be described using the following non-limiting embodiments of apparatuses and/or methods and/or computer programs by way of example only, and with reference to the accompanying figures, in which

Figure 1 shows an embodiment of a mobile transceiver apparatus;

Figure 2 shows an embodiment of a base station transceiver apparatus;

Figure 3a depicts network scenario with embodiments;

Figure 3b depicts another network scenario with embodiments;

Figure 3c depicts yet another network scenario with embodiments;

Figure 3d depicts yet another network scenario with embodiments;

Figure 4 depicts a block diagram of another network with embodiments;

Figure 5 illustrates time scales in an embodiment;

Figure 6a illustrates an embodiment of the means for allocating;

Figure 6b shows a viewgraph with LIRA and final priorities;

Figure 7 depicts a block diagram of an embodiment of the means for determining at the mobile transceiver apparatus;

Figure 8 illustrates a viewgraph of scheduling priorities;

Figure 9 shows viewgraphs illustrating user priorities in an embodiment;

Figure 10 shows another embodiment and the distribution of priorities in the embodiment;

Figure 11 illustrates a message sequence chart of a communication in an embodiment;

Figure 12 illustrates a communication protocol of an embodiment;

Figure 13 illustrates a communication protocol of an embodiment;

Figure 14 illustrates a communication protocol of an embodiment;

Figure 15 illustrates an implemented architecture of an embodiment;

Figure 16 illustrates simulation results for embodiments;

Figure 17 illustrates simulation results for embodiments.

Figure 18 shows a flow chart of an embodiment of a method for a mobile transceiver; and

Figure 19 shows a flow chart of an embodiment of a method for a base station transceiver.

Description of some Embodiments

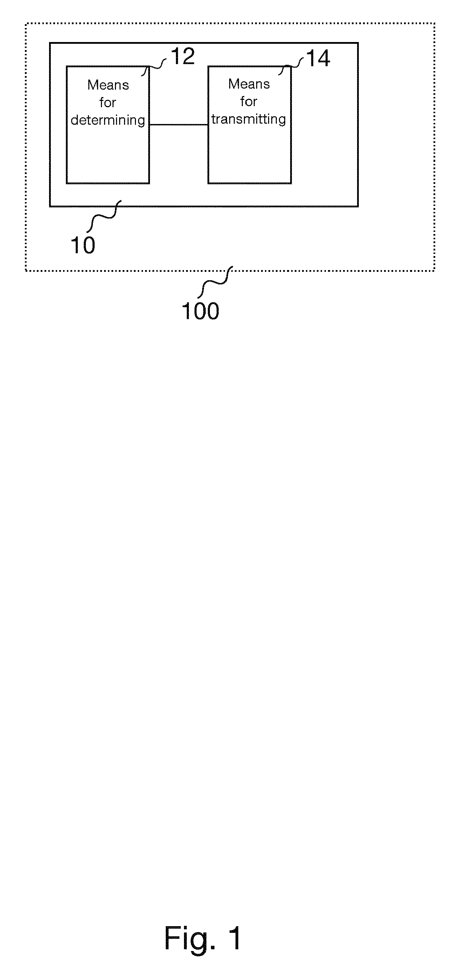

Figure 1 shows an embodiment of an apparatus 10 for a mobile transceiver 100 in a mobile communication system. The mobile transceiver 100 is shown in broken lines indicating that it is optional. Embodiments may provide a mobile transceiver 100 comprising a mobile transceiver apparatus 10. The mobile communication system further comprises a base station transceiver. The mobile transceiver apparatus 10 comprises means for determining 12 information on a data amount of a data service, the information referring to a time interval during which the mobile transceiver 100 communicates data associated with the data service to one or more base station transceivers. The apparatus 10 further comprises means for transmitting 14 the information to the base station transceiver 200. The means for determining 12 is coupled with the means for transmitting 14.

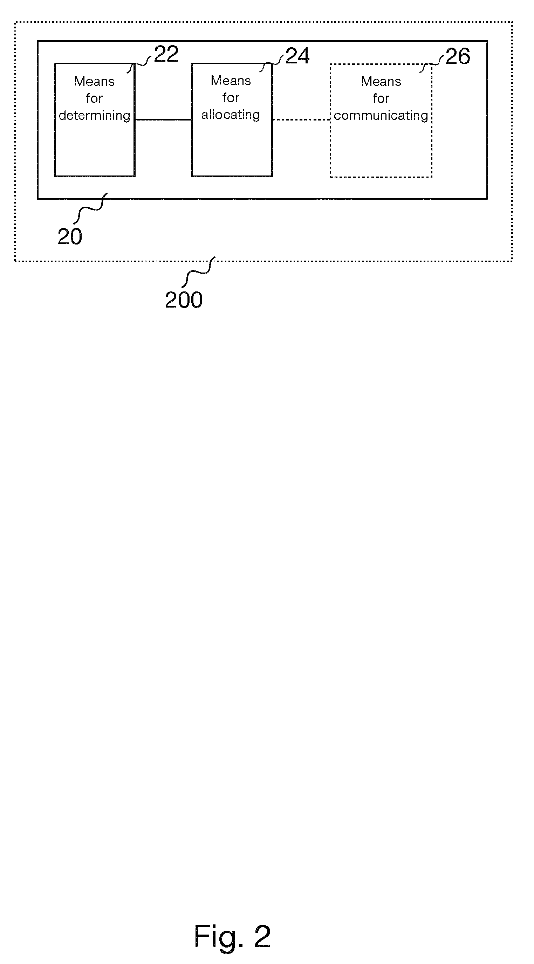

Figure 2 shows an embodiment of an apparatus 20 for a base station transceiver 200 in a mobile communication system. The base station transceiver 200 is shown in broken lines indicating that it is optional. Embodiments may provide a base station transceiver 200 comprising a base station transceiver apparatus 20. The mobile communication system further comprises a mobile transceiver 100. The base station transceiver apparatus 20 comprises means for determining 22 information on a data amount of a data service, the information referring to a time interval during which the mobile transceiver 100 communicates data associated with the data service to one or more base station transceivers. The base station transceiver apparatus 20 further comprises means for allocating 24 radio resources to the mobile transceiver 100 based on the information, which is coupled with the means for determining 22. As an optional component (broken lines ) Figure 2 also shows means for communicating 26 with another base station transceiver. The means for communicating can be coupled to the means for allocating 24 and/or with the means for determining 22.

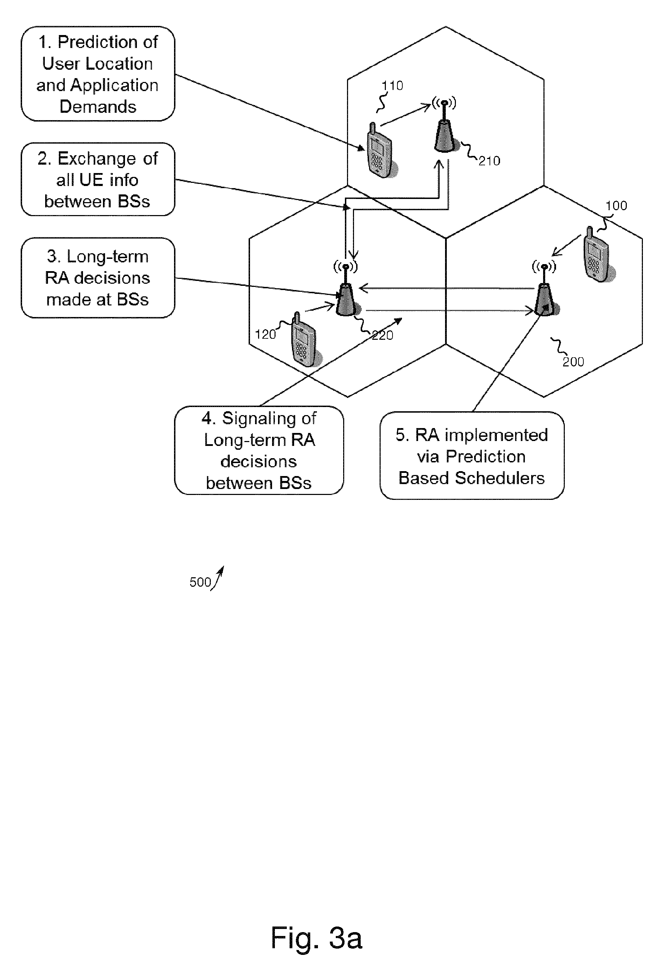

For the first embodiment the network scenario depicted in Figure 3a will be explained. Figure 3a shows a communication network 500, which comprises three mobile transceivers 100, 110 and 120, as well as three base station transceivers 200, 210, and 220. Each of the mobile transceivers 100, 110, 120 comprises a mobile transceiver apparatus 10 according to Figure 1. Each of the base station transceivers 200, 210, 220 comprises a base station transceiver apparatus 20 according to Figure 2.

Moreover, a number of steps are indicated in Figure 3a, which explain how prediction based scheduling is established. The embodiment follows the steps in Figure 3a, where the three BSs 200, 210, 220 cooperate to make RA decisions.

In the embodiment, the means for determining 12 in the mobile transceiver apparatuses 10 is adapted to predict a future data demand and a future location of the respective mobile transceivers 100, 110, 120. This is shown by step 1 indicating that prediction of user location and application demand is carried out at mobile transceiver 110. Moreover, the means for transmitting 14 is adapted to communicate the information on the future data demand and/or the future location to the base station transceivers 200, 210, 220. In other words, in embodiments the mobile transceivers 100, 110, 120 may comprise location and/or application prediction modules that predict future locations and application demands, which are communicated to the BSs 200, 210, 220.

Moreover, in the embodiment the base station transceivers 200, 210, 220 the means for determining 22 is adapted to receive the information from the mobile transceivers 100, 110, 120. In embodiments such information may also be received from another base station transceiver or the means for determining 22 can be adapted to predict a future data demand of the mobile transceiver based on an application being executed on the mobile transceiver. In the embodiment depicted in Figure 3a the information on the data amount corresponds to a future data demand of the mobile transceivers 100, 110, 120 and their future locations.

The base station transceivers 200, 210, and 220 establish long-term inter-cell resource allocation that utilizes the information in from the mobile transceivers 100, 110, 120 gathered from multiple cells to make regional long-term allocation decisions for multiple cells. The exchange of information between the cells or base station transceivers 200, 210, 220 is indicated by the arrows between the base station transceivers 200, 210, 220 in Figure 3a and is also shown by the second step of exchanging the information of all mobile transceivers 100, 110, 120 or UEs between the bases station transceivers 200, 210, 220.

In the embodiment, the base station transceiver apparatus 20 comprises means for communicating 26 with another base station transceiver 210 in order to carry out the above data exchange. The base station transceiver apparatus 20 comprises means for communicating 26 the information on the data amount of the mobile transceiver 100 with another base station transceivers 210, 200.

With respect to base station transceiver 220, the means for communicating 26 is adapted to receive information on a future data demand and the future location of another mobile transceivers 100, 110 from the other base station transceiver 200, 210, which is indicated by the arrows pointing toward base station transceiver 220 in Figure 3a. The means for allocating 24 radio resources is adapted to determine an allocation of radio resources or a priority for the other mobile transceivers 100, 110 based on the future data demand of the other mobile transceiver 110.

In other words, in the embodiment of Figure 3a a long-term RA is carried out at base station transceiver 220, which receives the according information from the other base station transceivers 200 and 210. This is also shown by step 3, which indicates that the long-term decisions are made at base station transceiver 220. Hence, the means for allocating 24 at the base station transceiver 220 establishes a predictive scheduler that implements the above allocation decisions based on the information on the future data demand and the future locations of the three mobile transceivers 100, 110, 120. The means for communicating 26 is further adapted to transmit information on the allocation of radio resources or priorities for the other mobile transceivers 100, 110, the ones not associated to base station transceiver 220, to the other base station transceivers 200, 210.

In the other base station transceivers 200, 210 the means for communicating 26 with another base station transceiver 220 is adapted to receive information on an allocation of radio resources or the priorities for the mobile transceiver 100, 110 from the other base station transceiver 220. This is also indicated by the arrows pointing away from base station transceiver 220 in Figure 3a. At the respective base station transceivers 200, 210, 220 the means for allocating 24 radio resources is adapted to allocate the radio resources to the mobile transceivers 100, 110 based on the information on the allocation of radio resources for the mobile transceivers 100, 110 from the other base station transceiver 220. In this embodiment the base station transceiver 220 carries out the long-term RA based on the information provided by the other base station transceivers 200, 210. The long-term RA is then returned to the respective base station transceivers, for example, in terms of a long-term priority. Thus, according to step 5 of Figure 3a, RA can be implemented by prediction base scheduler at the individual base station transceivers 200, 210, 220, which takes into account the long-term RA

Embodiments may utilize signaling protocols that enable the UE 100, 110, 120 to send the predicted information to the BS 200, 210, 220, and enable the BSs 200, 210, 220 to exchange user information and to exchange the regional allocation decisions made. Details of these functions and architecture will be provided subsequently.

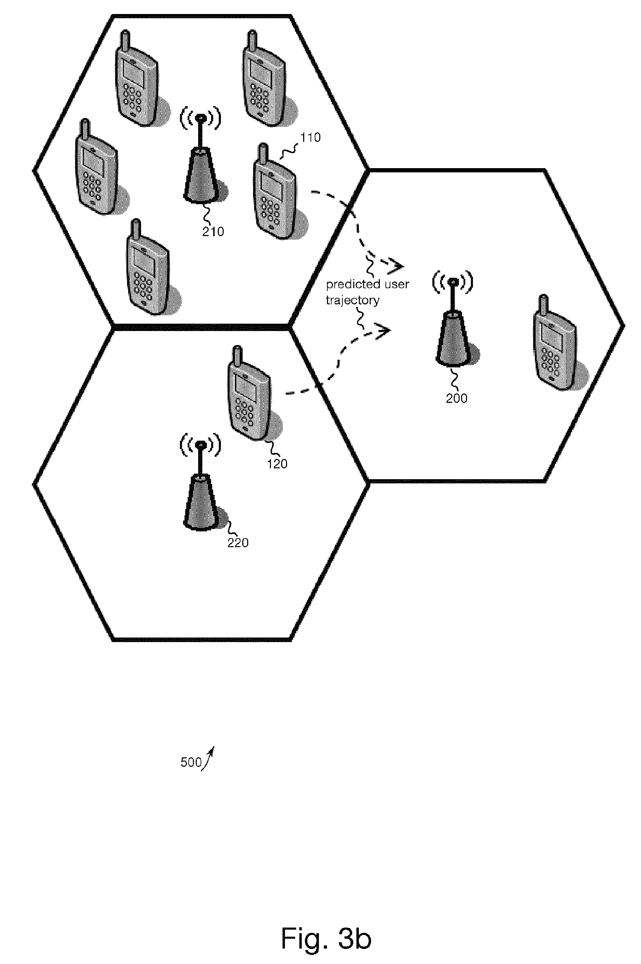

To illustrate another embodiment, Figure 3b shows the same network 500 with the three base station transceivers 200, 210, 220. Two mobile transceivers 110 and 120 are considered, which both comprise a mobile transceiver apparatus 10 according to the above description.

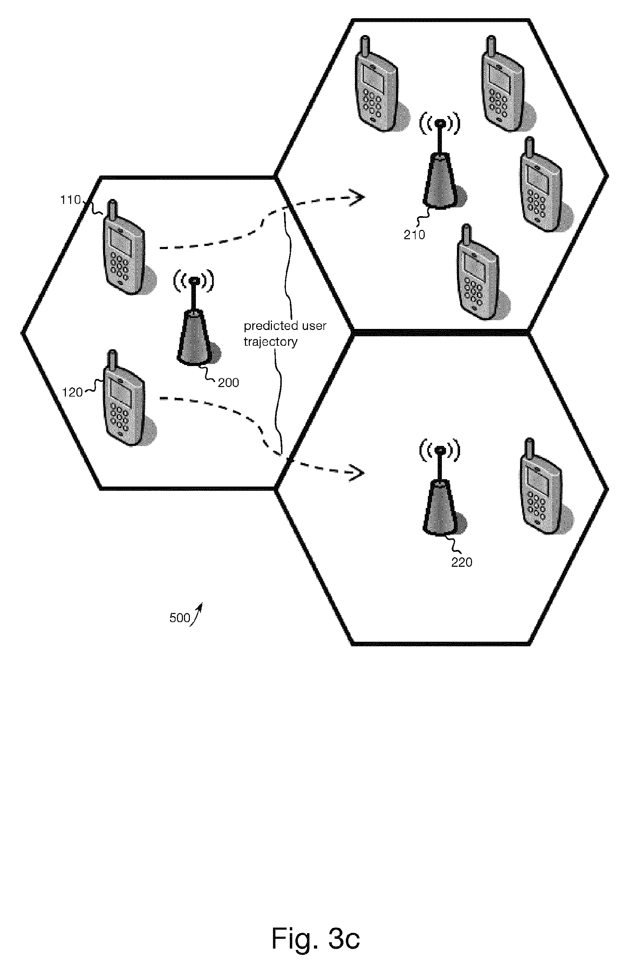

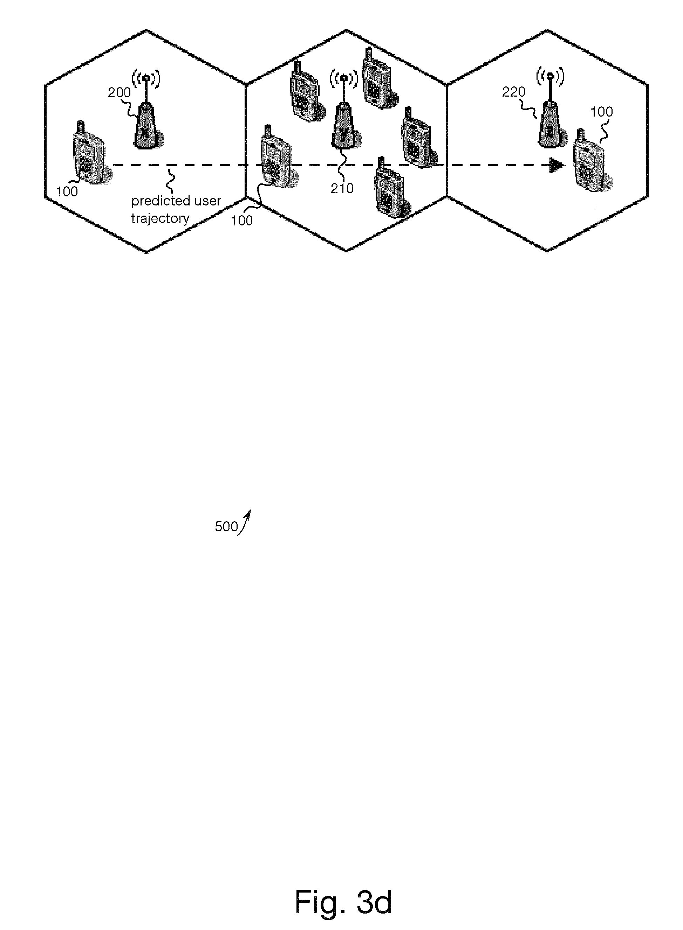

In this embodiment prior allocation information is used as information on the data amount, i.e. the information on the data amount can correspond to the average data rate or a data history of the mobile transceivers 110 and 120 during the time interval. Both mobile transceivers 110, 120 are about to hand over to base station transceiver 200, one originating from base station transceiver 210, the other originating from base station transceiver 220. Note, that in Figures 3b, 3c and 3d the trajectories of the moving mobile transceivers are given by dashed arrows. In other words, a mobile transceiver 110, 120 can be associated to two or more base station transceivers during the time interval. The means for allocating 24 at the base station transceiver 200 is adapted to allocate radio resources to the mobile transceivers 110, 120 based on a resource allocation history or the average data rate of the mobile transceivers 110, 120.

In Figure 3b both users 110 and 120 have ongoing sessions and arrive at cell or base station transceiver 200. User 110 was in congested cell or base station transceiver 210 and was poorly served, whereas user 120 was in vacant cell or base station transceiver 120 and was adequately served. As base station transceiver 200 knows about the data history of both UEs 110, 120 it can now prioritize user 210 over user 220 when they arrive in cell 200. This shows an advantage of embodiments over conventional concepts, which may not base their RA decision on previous RA. Therefore, embodiments may compensate user 210 for its poor service history. The means for allocating 24 can be adapted to allocate radio resources to the mobile transceiver 100 further based on a resource allocation history or the average data rate of the mobile transceiver 100.

Figure 3c depicts anther network 500 with the three base station transceivers 200, 210, 220. Two mobile transceivers 110 and 120 are considered, which both comprise a mobile transceiver apparatus 10 according to the above description. The embodiment will make use of the predicted or future location. The embodiment of Figure 3c somehow inverts the embodiment of Figure 3b.

Users 110 and 120 are in cell 200 and user 110 is predicted to move to congested cell 210, whereas user 120 is predicted to move to vacant cell 120. In the embodiment, RA in cell 200 exploits these predictions, and user 110 is allocated more resources while still in cell 200 to make up for the future lower allocation it will receive in cell 210. Embodiments may therewith allow exploitation of such predictions and can enable a preparation or pre-compensation of user 110 for moving through a congested cell. By doing so, embodiments may achieve a better network-wide fairness among cells 200, 210, 220. Thus, in the embodiment of the base station transceiver apparatus 20 at the base station transceiver 200 the means for allocating 24 is adapted to allocate more radio resources to the mobile transceiver 110, 120 when the future data demand will be higher than a serving capacity of the base station transceiver 210, 220 at the future location than when the future data demand will be lower than a serving capacity of base station transceiver 220 at the future location. In embodiments the means for determining 22 can be adapted to predict the future location of the mobile transceiver 110, 120 based on an application being executed on the mobile transceiver 100, 110, 120.

Figure 3d depicts anther network 500 with the three base station transceivers 200, 210, 220. A mobile transceiver 100 is considered, which move through the network 500 starting a cell 200, proceeding to cell 210 and ending up in cell 220. The mobile transceiver 100 comprises a mobile transceiver apparatus 10 according to the above description. The present embodiment makes use of joint predicted location and application demands, as the information on the data amount. Figure 3d illustrates a case where the embodiment utilizes both location and user application predictions. User 100 is currently streaming a video and is predicted to pass through congested cell 210 for a short duration, and thereafter enter cell 220. This information is made available to the BS or cell 200, which decides that it can allocate additional resources to user 100 to buffer parts of the video stream in advance and then not require service in cell 210, which can be informed not to serve the user 100 or to serve user 100 with a reduced data rate. Therefore the already congested cell 210 may not lose further capacity to user 100 and the QoE of other users in 210 will not degrade further. Embodiments may provide the advantage that a user 100 would not compete or not compete as strong for resources in cell 210 and degrade the QoE of all the users. The above three embodiments can be extended to multiple cells and users where the network losses of current RA would increase and embodiments may provide even greater advantages.

In the following further embodiments will be described. At first, some implementations of the means for allocating in 24 in embodiments will be detailed. The mean for allocating 24 will also be referred to as Predictive Inter-cell Resource Allocator 24. The Predictive Inter-cell Resource Allocator 24 may use predictions of application demands and locations of users 100, 110, 120 obtained from several neighboring BSs 200, 210, 220 to make long-term allocation decisions for the users 100, 110, 120, as they move across the BSs 200, 210, 220. Embodiments may improve the network capacity, balance load, and satisfy the users 100, 110, 120 QoE demands.

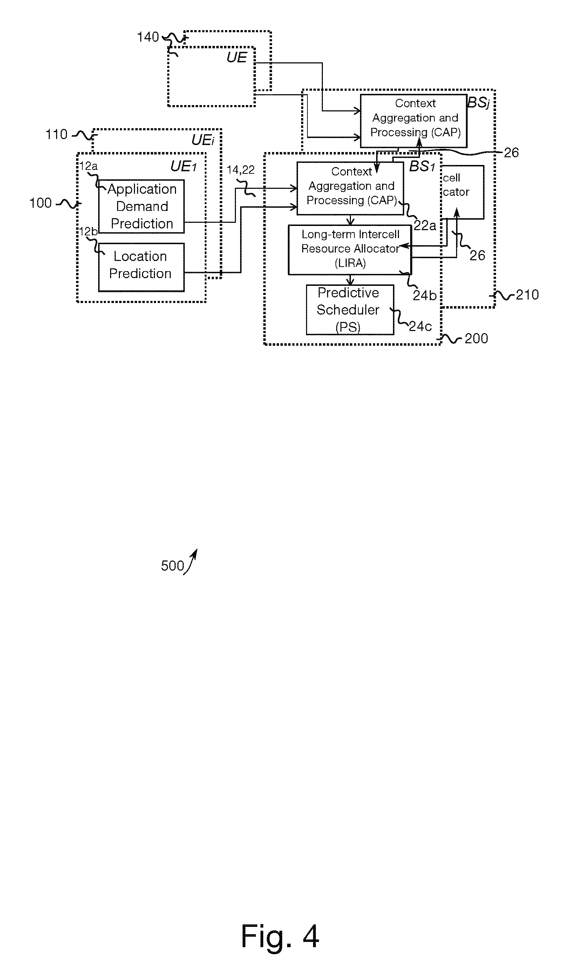

Figure 4 illustrates another network 500, wherein the major functionalities are shown by block diagrams. Figure 4 shows two embodiments of mobile transceivers 100, 110, which are associated to the base station transceiver 200. Moreover, Figure 4 depicts another base station transceiver 210, to which other mobile transceivers 140 are associated.

The mobile transceivers or UEs 100, 110 both comprise a mobile transceiver apparatus 10 according to Figure 1. The means for determining 12 is implemented as application demand prediction 12a and location prediction 12b. The means for transmitting 14 is indicated by the corresponding arrows 14. That is to say, at the user equipment 100, 110 application demand 12a and location predictor 12b are introduced to regularly send the predictions to the BS 200.

The base station transceivers 200, 210 comprise an according base station transceiver apparatus 20 according to Figure 2. The means for determining 22 is implemented as a receiver, receiving the information form the UEs 100, 110, indicated by the arrows, and as a Context Aggregation and Processing module (CAP) 22a. Neighboring BSs 200, 210 exchange this information with each other, using the means for communicating indicated by arrows 26. The means for allocating 24 is subdivided in two components a Long-term Inter-cell Resource Allocator (LIRA) 24b, which utilizes this information to make allocations for users 100, 110 across several BSs and time instances in the future, and a Predictive Scheduler (PS) 24c using the allocations from the LIRA 24b.

Two different embodiments shall be considered, one with a distributed architecture and one with a central architecture. For a distributed architecture each BS 200, 210 would have a LIRA module 24b, whereas in a central architecture the LIRA module 24b would be needed only at the cluster head, e.g. a Master Base Station (MBS), e.g. BS 200. In embodiments the LIRA 24b may choose to prioritize a user at one BS and then give it a lower priority at a BS it will associate with in the future (cf. embodiments above), and in this sense it makes long-term allocations. The predictions enable the LIRA 24b to make allocations that may improve the long-term network performance. Once these allocations are made, the Predictive Scheduler (PS) 24c at each BS implements them via a scheduler that incorporates additional user information such as the channel quality experienced by the users.

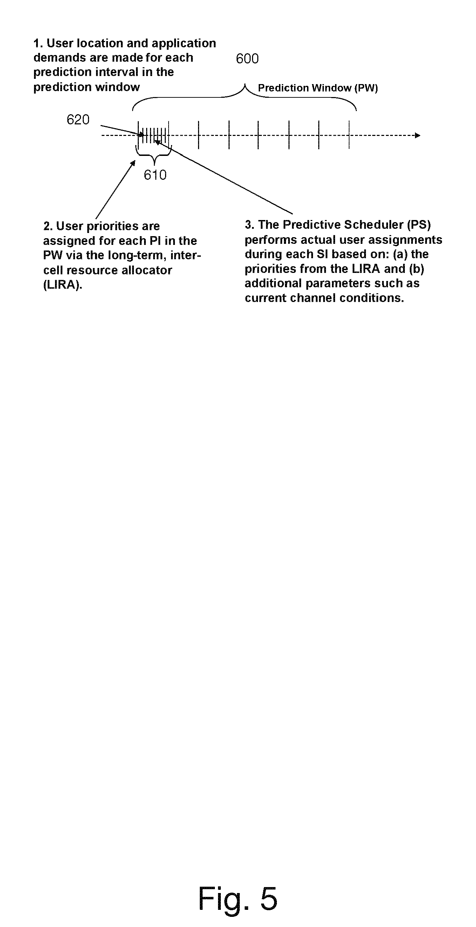

In the following the time scales utilized by embodiments will be described. Figure 5 illustrates the time scales at which the introduced functions operate in an embodiment. The means for determining 12 in the mobile transceiver apparatus 10 or the means for determining 22 in the base station transceiver apparatus 20 may carry out such predictions. The predictions may refer to a Prediction Window (PW) 600 spanning the longest time interval of the subsequent sub-intervals. The PW 600 is the largest time unit. It defines the duration over which the traffic and trajectory predictions for a user are made. A PW can be in the order of minutes, e.g. 1, 2, 3 5 or 10 minutes.

Each PW 600 is divided into several Prediction Intervals (PIs) 610. During each PI 610 a user 100 makes a new prediction, using the means for determining 12. The PI 610 therefore represents the granularity over which predictions are made. As LIRA 24b is based on these predictions, its long-term allocations may also have a granularity of a PI 610. LIRA generates, for example, a priority for each user in each PI 610. This is referred to as inter-cell RA. A Scheduling Interval (SI) 620 represents the interval over which the intra-cell scheduler 24c, as an embodiment of the means for allocating 24, can assign resource blocks to different users. The SI may correspond to a Time Transmission Interval (TTI) in a 3GPP network as LTE. This RA 24c can follow traditional channel-aware scheduling approaches such as proportional fairness (PF) but incorporates the user priorities generated by LIRA 24b. As also indicated in Figure 5, in the embodiment user location and application demands are made for each prediction interval 610 in the prediction window 600. User priorities are assigned for each PI in the PW via LIRA 24b. Moreover, the predictive scheduler 24c performs actual user assignments during each SI based on the priorities from the LIRA 24b and additional parameters such as current channel conditions.

The difference between PW and PI can also be explained with the help of Figure 3d. In cell 200 user 100 makes predictions lasting several PIs. As illustrated, the user will remain in cell 200 during a first PI. In the second PI, the user 100 predicts to move to cell 210 and, in the third PI, to be in cell 220. In this case, the user's PW consists of three PIs. In the embodiment, the means for determining 12 is adapted to provide a new prediction per prediction interval 610, and the time interval refers to the prediction window 600. The prediction window 600 is longer than the prediction interval 610.

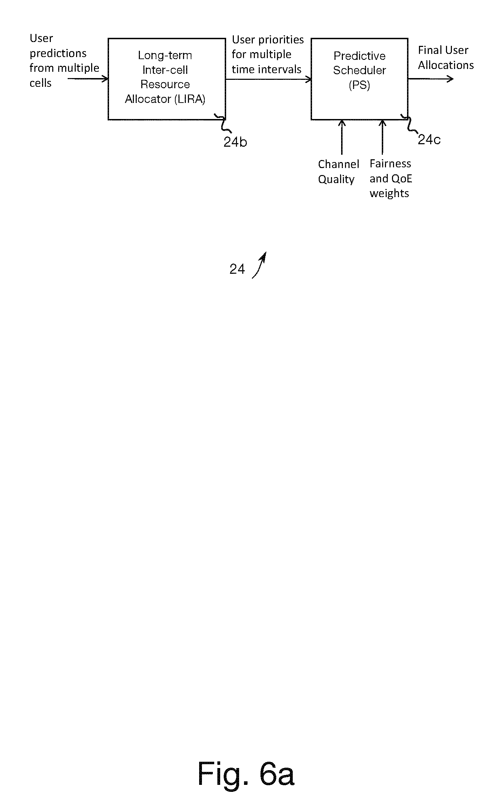

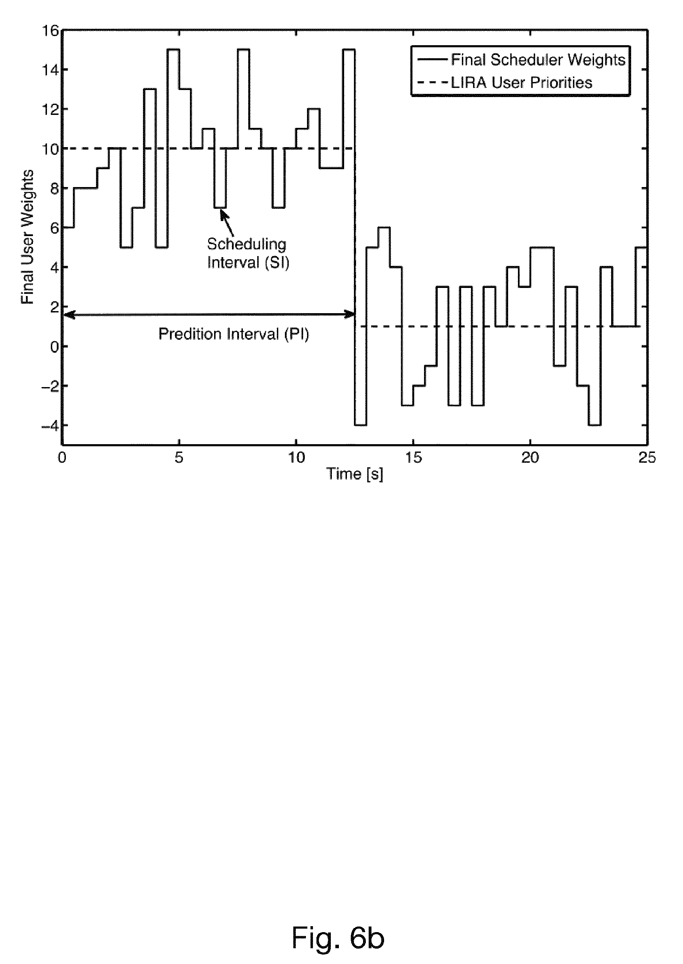

In conclusion, in this embodiment the means for allocating 24, implemented as LIRA, generates user priorities for each PI. Several PI form one complete prediction period, called PW. These predictions lead to long-term priorities, based on inter-cell information but affect intra-cell RA, e.g., scheduling, on a shorter time-scale. The shortest time unit is the SI, how to join long and short term prioritization will be described subsequently. This interaction is further illustrated in Figures 6a and 6b, which show an example of how the scheduler weights are impacted by the LIRA user priorities in an embodiment. The core RA functionality of an embodiment is shown in Figure 6a. LIRA 24b generates long-term user priorities (based on user predictions) and provides them to the scheduler. The scheduler incorporates these priorities in its user weight computations and thereafter makes the final user allocations. As can be seen in Figure 6a the means for allocating comprises the LIRA 24b and the PS 24c.

The LIRA 24b has an input for the user predictions, i.e. the information on the data amount, from multiple users and multiple cells. The LIRA 24b outputs user priorities for multiple time intervals, which are then input into the PS 24c. Moreover, the PS 24c has inputs for the channel quality of the users assigned to its base station and an input for Fairness and QoE weights. The PS 24c then outputs the final user allocations. Figure 6b illustrates a view chart showing the different priorities on a time line. The viewgraph shows examples of the scheduling weights after adding the LIRA user priorities to the traditional scheduler weights. This enables the scheduler to prioritize one user over another based on long-term information from LIRA 24b but also to incorporate short-term channel quality and fairness measures. The LIRA user priorities, which are indicated by broken lines, are constant over a PI, whereas the final scheduler weights, which are indicated by a solid line, vary around the LIRA priorities and change from SI to SI. The overall time span shown in Figure 6b is 25s, i.e. a PI lasts for 12.5s.

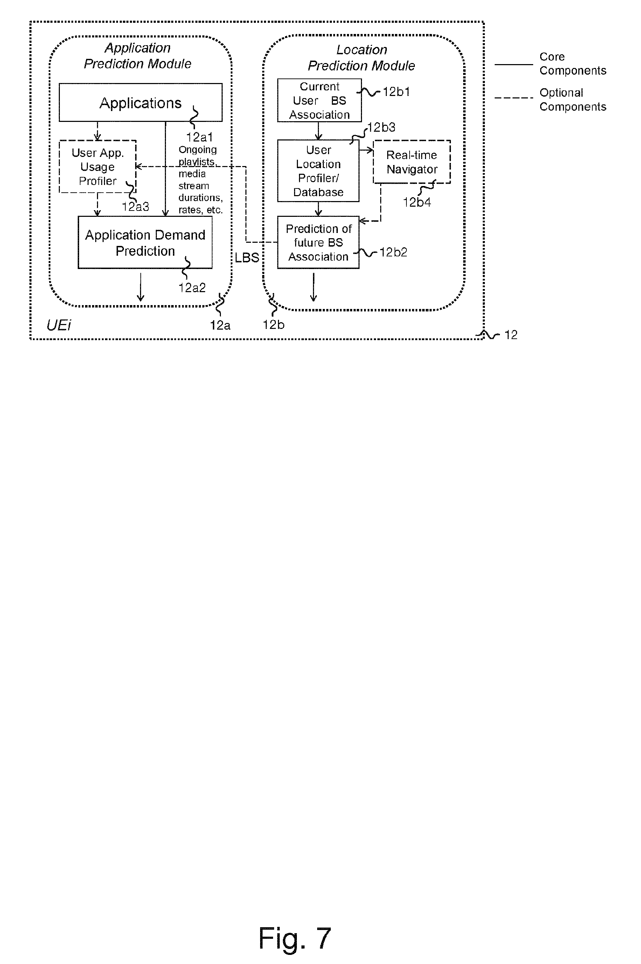

In the following an Application Prediction Module (APM) will be described as an embodiment of the means for determining 12 the information on the data amount in the mobile transceiver apparatus 10. The APM in the UE apparatus 10 monitors user applications and predicts future application demands for ongoing sessions. The purpose of this module is to predict non-real time application demands that can be opportunistically sent to the user in bulk transmissions. Figure 7 depicts a block diagram of an embodiment of the means for determining 12 at the mobile transceiver apparatus 10. As illustrated in Fig. 7, these predictions are based on an APM 12a and a Location Prediction Module (LPM) 12b. In the APM 12a direct information is available from applications 12a1. Examples include the streaming data-rate of a media file along with the total duration of the file, which provides a predicted data-rate over a time interval. Similarly, a loaded playlist in a media player to be downloaded 'from the cloud' is another example. The total size of a file being downloaded provides a measure of the bulk data being requested by that user.

Moreover, information from an applications usage profiler 12a3 is available, which can optionally be integrated into the UE apparatus 10. This profiler 12a3 monitors and stores user application habits associated with different times of the day, and different locations. This information is passed on to the application demand prediction module 12a2 which then delivers information on a future data demand. Location Based Services (LBS) can be input into the profiler 12a3. The predicted location of the user from the LPM 12b is provided to the applications profiler to predict LBS.

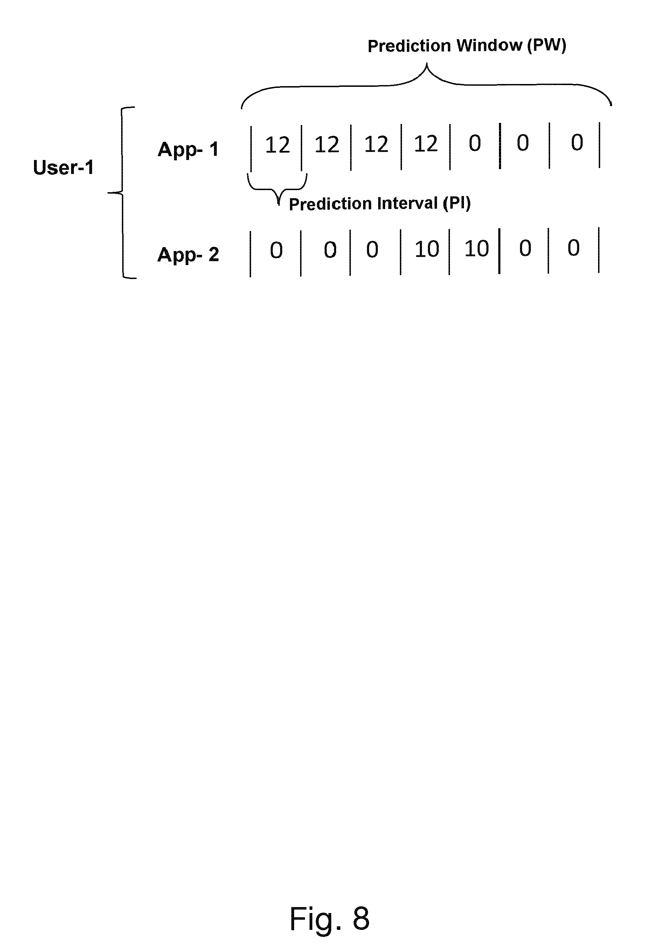

Figure 8 illustrates a viewgraph of scheduling priorities of an APM 12a. A sample output of the APM 12a is shown for two applications App-1 and App-2, both being executed by a User-1 and where both applications are predicted. App-1 is an example of a streaming application with a constant predicted rate, 12 rate units per PI, and which ends after four prediction intervals. App-2 is an example of a LBS which is predicted to start at the 4th prediction interval, lasts for two PIs, and has a constant rate of 10 rate units per PI interval.

Coming back to Figure 7 the LPM 12b will now be detailed. The LPM 12b in the UE 100 predicts which BSs a user will be associated with in the future, and for how long. This is accomplished by a User Location Profiler (ULP) 12b3, which stores historical User-BS association sequences and the times at which they occurred. The current User-BS association is provided by module 12b1. When a mobile user accesses the network, its BS transitions are recorded and then compared to the database of previous transitions made in the ULP 12b3. Matching algorithms, such as those provided by Laasonen et al, can be applied to find the best partial match once a sequence of BS-transitions is made by the user. The future user-BS transitions are determined by module 12b2 from the remaining segment of this partial match. If the final destination of the user is provided as input then matching is further enabled. Results are also narrowed by comparing the current time to the times at which the matched sequences occurred.

Optionally, information from the UEs localization unit (e.g., GPS, Triangulation, Compass) and UE navigation software (e.g., calculated route, estimated travel duration and time of arrival) can be employed for prediction, as shown by the optional real-time navigator 12b4 in Figure 7. This real-time information enables more accurate estimates of the duration a user will spend in each BS it is predicted to associate with.

Fig. 7 illustrates the components of the LPM 12b and their interaction. In the following a sample string matching algorithm that can be used in module 12b2 for the prediction of future User-BS associations based on a database in the ULP 12b3. This database includes the backlog of associated BS over time. Within this data, the algorithm searches for User-BS association sequences that are similar to the current sequence made by the user. Typical similarity measures such as cross-correlation or covariance can be employed. The algorithm will return the match that occurs at a time closest to the current time:

$t_k$: *current time*

$BS_x$: *current BS user is at*

$BS_1 BS_2..BS_{x-1}$: *sequence of BSs user has associated with*

*U-BS: Database of user-BS sequences (in ULP)*

$S_i$: *String i of user-BS sequences in U-BS.*

*N: number of strings in U-BS*

*Mat: The set of matched sequences*

*#Find all matches between $S_i$ and $BS_1 BS_2..BS_{x-1} BS_x$*

**for** *i=1* **to** *N*

Determine similarity $D_i$ between $S_i$ and $BS_1 BS_2..BS_{x-1} BS_x$

*#Different similarity measures may be used*

**if** $D_i$ < *threshold* **then**

$Mat = Mat \cup S_i$

**end if**

**end for**

*#Compare time when matches occurred to current time*

**for** *i=1* **to** *length(Mat)*

Calculate $t_k - t_i$ where $t_i :=$ *time associated with last BS in $S_i$* $\forall$ $S_i \equiv Mat$

**end for**

Sort $S_i \in Mat$ based on $t_k - t_i$

**Return** $S_x$ with $min(t_k - t_i)$

On the BS side the means for determining 22 may comprise a Context Aggregation and Processing module (CAP) 22a, cf. Figure 4. In the embodiment the CAP module 22a located in the BS 200 is a system component that processes the predicted location and application user signals. It aggregates the user predictions acquired from several UEs at the BS, and exchanges it with neighboring BSs, i.e. through the means for communicating 26. This functionality will be detailed in the sequel. The CAP 22a further aggregates the user predictions received from several BSs, through the means for communicating 26, and provides it to LIRA 24b, as implementation for the means for allocating 24. This function may construct an internal data structure used at the B S.

In the following an embodiment of the means for allocating 24 as LIRA 24b will be described. In the embodiment, the LIRA scheme is central to the predictive RA architecture. Here user predictions, i.e. the information on the data amount, are incorporated in the resource allocation process. From these predictions the network load at different parts of the network is predicted and the allocator's 24b role is to evenly distribute the load such that congestion is prevented and to serve users in a long-term fair manner over multiple cells. This is accomplished by two RA concepts. First there is a long-term user prioritization. Users heading to congestion zones can be prioritized before they reach them, and then they can be given lower priorities once they are there. The underlying concept is to serve them in advance, e.g., by buffering a currently streamed video with sufficient content to last the duration spent in the congested zone, as it has been described with respect to Figure 3d. Second, inter-cell user fairness can be achieved. Base stations can exchange information on predicted user demands and locations. They are therefore able to collectively make allocations that ensure fairness for each user as it traverses several BSs. For example a BS can compensate the poor service a user experienced in a prior BS and therefore establish long-term service fairness.

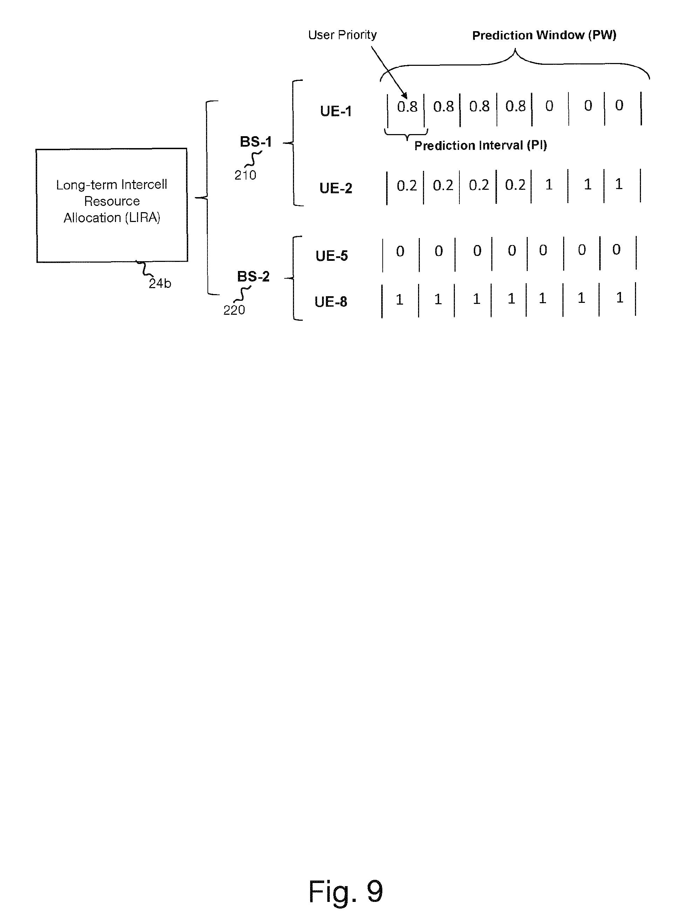

Figure 9 shows viewgraphs illustrating user priorities in an embodiment. As illustrated in Figure 9 the output of the LIRA 24b are long-term priorities for each user at each BS. The priorities are made for several prediction intervals. In the sample output it can be seen that UE-1 is given a high priority (0.8) for the first four PIs and then it is given a priority of 0. UE-2 is given a low priority (0.2) for the first four PIs and then it is given all the resources, priority of 1. UE-5 is not served at all at BS-2 and UE-8 is given all the resources (priority 1). UE-8 can be a starved user. These priorities are then used during scheduling by the Predictive Scheduler 24c for actual resource block assignments.

The LIRA 24b may operate in a centralized or distributed manner depending on how the prediction information is disseminated and how allocations decisions are made. In either case an optimization procedure is carried out to determine the user priorities at each prediction interval. The details of centralized LIRA operation are presented below.

In some embodiments operation of LIRA 24b is centralized. As a centralized implementation, LIRA operates at a Master BS (MBS) 200, which covers a cluster of BS 210, 220. Cluster formations can be either predefined or they can be dynamically made during network operation. The MBS 200 makes long-term allocations for the users across all the BSs 200, 210, 220 in the cluster, using the means for communicating 26. In some embodiments the MBS 200 is a base station transceiver corresponding to the other base station transceivers 210, 220 with additional functionality (LIRA) and with having mobile transceiver associated to itself, such that the PS 24c in the MBS 200 also the internally transferred LIRA output. In other embodiments, the MBS 200 may be a separated base station transceiver, which provides the LIRA output only to other base station transceivers 210, 220 without considering the LIRA outputs for itself.

The process is as follows. In a first step the UEs 100 signal their predictions to their associated BS 200, 210, 220 via the wireless uplink in the above described manner. In a second step, BSs 210, 220 transfer all predicted UE information to the MBS 200 via the backhaul, using their means for communicating 26. In a third step, at the MBS 200, LIRA 24b generates long-term priorities for the UEs of all BSs 210, 220. In a fourth step, the MBS 200 signals these user priorities to the BSs 210, 220 via the backhaul. In a fifth step, the BSs 210, 220 integrate LIRA's user priorities into their schedulers 24c and make final PRB assignments to the users.

Before detailing this process, the relevant functions, nodes, and quantities are defined. A cluster of N BSs denoted by $BS_j$ where each BS has R resource blocks that it can allocate during each prediction interval. There are a total of *M* active users in the cluster, denoted by $U_i$.

Furthermore a *cell association function X* is defined. If $BS_j$ is serving $U_i$ at prediction interval *k* the association function *X* is defined as:

$BS_j(t_k) = U_i$. This is the output of the LPM 12b.

The user demand is defined as $D_i(t_k)$, representing the demand of user i at prediction interval *k* expressed in resource blocks. This is the output of the APM 12a.

The Accumulative User Demand (AUD) can be defined as:

$$D_i^{\sim}(t_z) := \sum_{x=k}^{z} D_i(t_x),$$

where *z=k* to *z=k+T* for a prediction window of length *T.* This definition will be used by LIRA 24b as will be shown below.

The user allocations are given as $A_i(t_k)$, representing the number of resource blocks allocated to $U_i$ at prediction interval *k.*

The Accumulative User Allocations (AUA) are defined as

$$A_i^{\sim}(t_z) := \sum_{x=k}^{z} A_i(t_x),$$

where *z=k* to *z=k+T* for a prediction window of length *T.* In the embodiment, the objective of LIRA 24b is to make long-term allocations that minimize the deviation of the AUA from the AUD. LIRA 24b operates on accumulative demands and allocations since allocations may be made in advance (to profit from pre-allocation). For example a predicted demand for a user at interval $t_4$ may be allocated in advance to the user at $t_1$. The main objective is to determine an allocation that achieves:

$$min. \sum_{i=0}^{M} \sum_{z=k}^{k+T} \max\left(0, D_i^{\sim}(t_z) - A_i^{\sim}(t_z)\right) \qquad (1)$$

where the internal max-operation returns a '0' if what is allocated is more than the demand (buffering content). If the allocation is less than the demand, the inner term in (1) represents the accumulative deficiency. LIRA 24b can minimize this long-term deficiency over the prediction window T, at least LIRA 24b can reduce the long-term deficiency when compared to conventional concepts.

Equation (1) is subject to the BS resource constraints:

$$\sum_{\left(i \mid BS_j = X(U_i)\right)} A_i(t_k) \le R$$

and may be extended by fairness constraints. The resulting allocations are normalized to obtain priority weights for the UEs. The means for allocating 24 can thus be adapted to minimize a deviation between the future data demand and a future allocated data amount resulting from the radio resource allocations for a plurality of mobile transceivers within a prediction window.

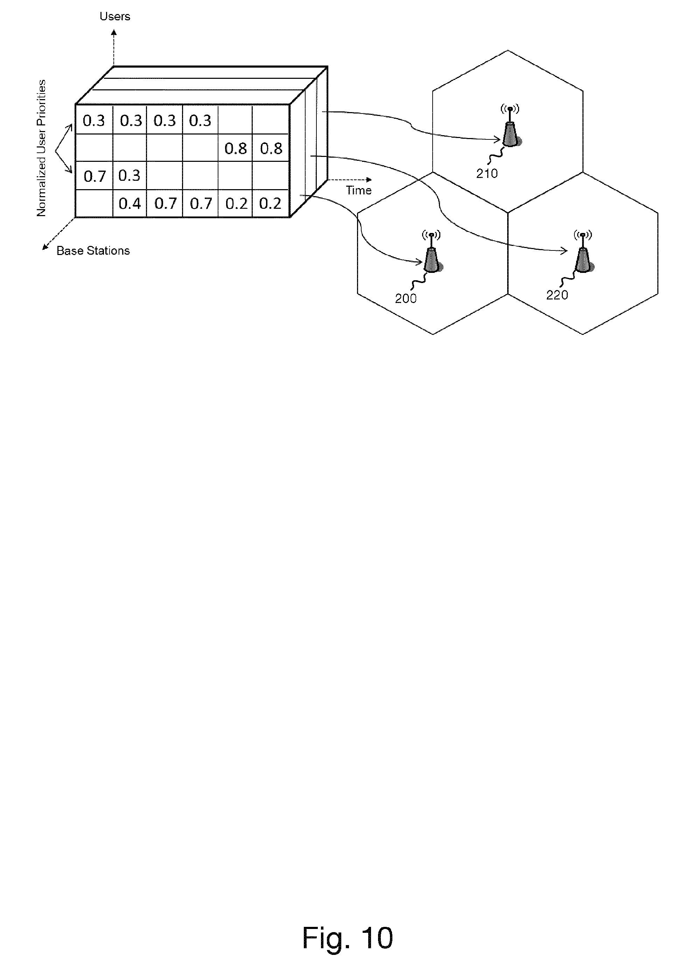

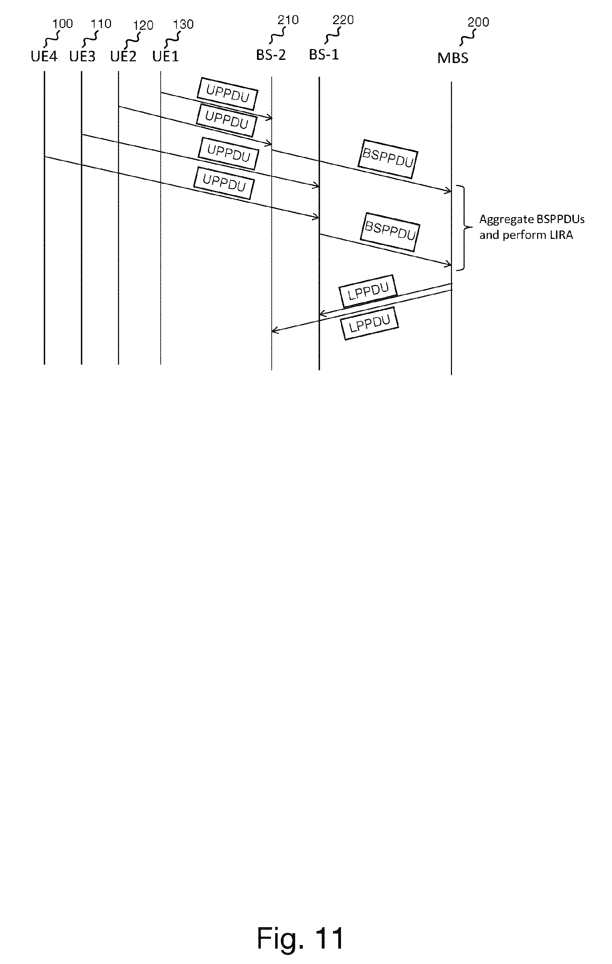

Figure 10 shows another embodiment and the distribution of priorities in the embodiment. Figure 10 depicts a viewgraph with three dimensions, which are base station transceivers, time, and users, on the left hand side and provides the according normalized user priorities. Moreover, Figure 11 shows the planes, which are associated with the respective base station transceivers 200, 210, and 220, on the right hand side. Figure 10 illustrates an example output for the centralized LIRA 24b operation. Each BS 210, 220 receives a matrix of user vs. time weights from the MBS 200 and incorporates these weights in the Predictive Scheduler 24c at prediction interval granularity.

In the following a signaling protocol, which can be used in embodiments, will be described. Figure 11 shows a message sequence chart of a communication in an embodiment. Four UEs 100, 110, 120, and 130 communicate with the base station transceivers 210, 220. The base station transceivers 210, 220 communicate with the MBS 200. Three Protocol Data Units (PDUs) are defined. The User Prediction Protocol Data Unit (UPPDU) carries predicted user information from the UEs 100, 110, 120, 130 to the BSs 210, 220. In the embodiment shown in Figure 11 there is no direct communication between the UEs 100, 110, 120, 130 and the MBS 200, which, in other embodiments, is certainly possible. The Base Station Prediction Protocol Data Unit (BSPPDU) carries aggregated UE predictions between BSs 210, 220 and the MBS 200. And the LIRA Priority Protocol Data Unit (LPPDU) carries user priorities generated by LIRA 200 towards the BSs 210, 220. Figure 11 depicts a message sequence chart with the corresponding signaling protocol data units.

The base station transceivers 210, 220 aggregate the UPPDUs received from several UEs 100, 110, 120, 130 into one BSPPDU. The MBS 200 aggregates the BSPPDUs received from its BS 210, 220 cluster members and performs LIRA. It sends the resulting user priorities to each BS 210, 220 in an LPPDU. In the embodiment of Figure 11 two BSs 210, 220 with two associated UEs, UEs 100, 110 are associated to BS 220 and UEs 120, 130 are associated to BS 210, operate in the centralized LIRA setup.

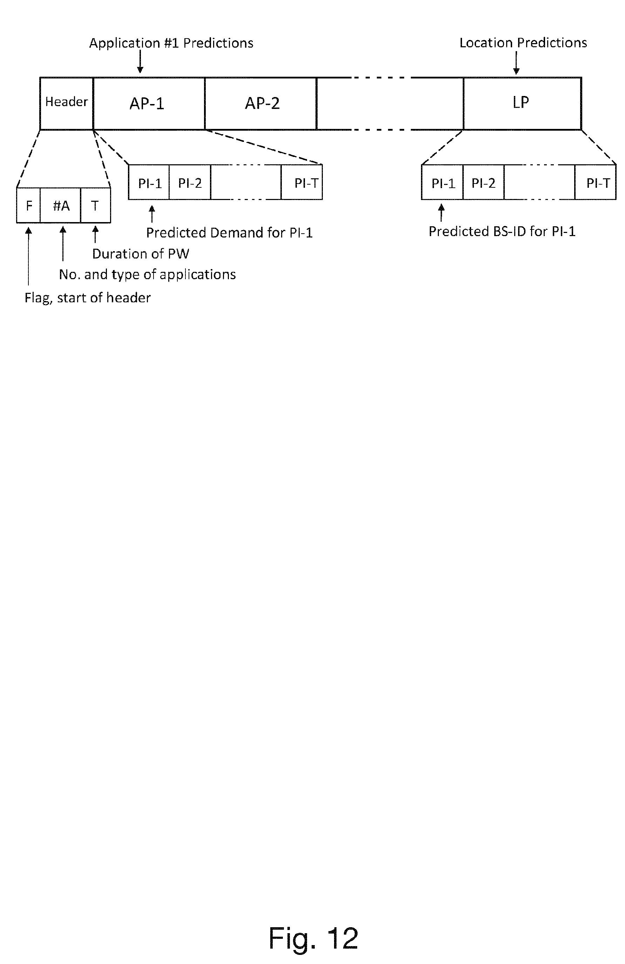

In the following, the user-BS signaling via the air-interface will be detailed. This signaling interfaces between the user prediction modules (APM 12a and LPM 12b) and the BS CAP module 22a, using the according means for communicating 26. Each UPPDU contains a header followed by the user application and location predictions as shown in Figure 12. The UPPDU is subdivided in a header section and a data section. The header comprises a flag-field F, which indicates the start of the header. The header comprises an #A-field, which contains a scalar for the number and type of applications, e.g. a vector containing the type of each application. Moreover, the header comprises a T-field, indicating the duration of the PW. For each application there is a data field comprising the predicted data demand for the PIs in the PW. Furthermore, the UPPDU comprises a data field for the location predictions at PI granularity, where predicted BS-IDs for the PIs are contained.

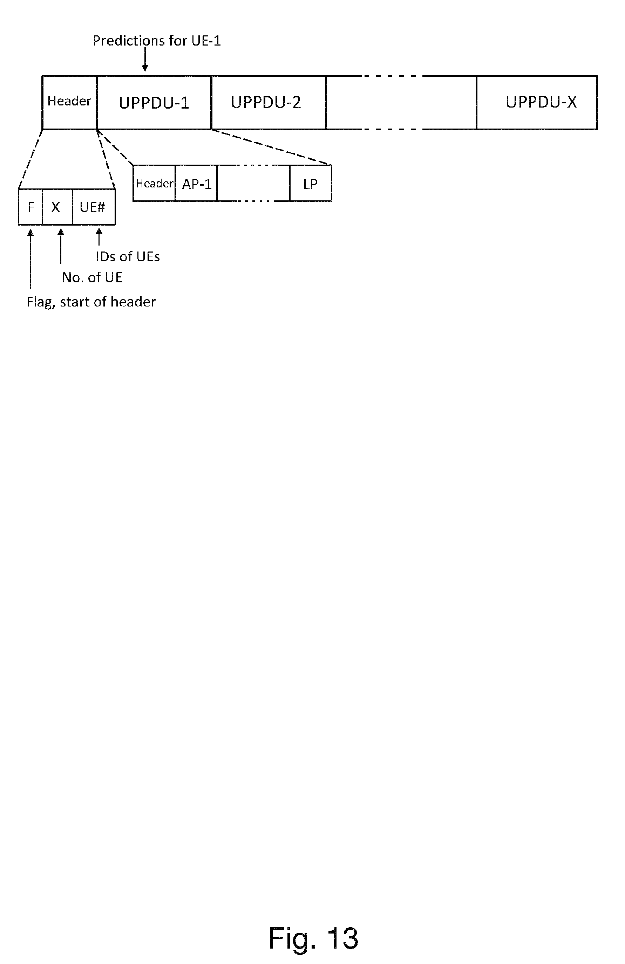

The BS-BS signaling of user predictions can be carried out via the backhaul of the BSs using the means for communicating 26. This signaling interfaces between the CAP modules 22a of different BSs 200, 210, 220. Its purpose is to exchange the aggregate user predictions collected at each BS 200, 210, 220. Each BSPPDU contains a header followed by several UPPDUs as shown with the help of the BSPPDU shown in Figure 13. The underlying UPPDUs are encapsulated as they are and concatenated in the data fields to form the BSPPDU to increase the protocol processing efficiency. The BS encapsulates all the UPPDUs received from the UEs into one BSPPDU. The header of the BSPPDU comprises a flag-field to indicate the start of the header, an X-field for the number of UEs and UE#-fields with the identifications of the UEs.

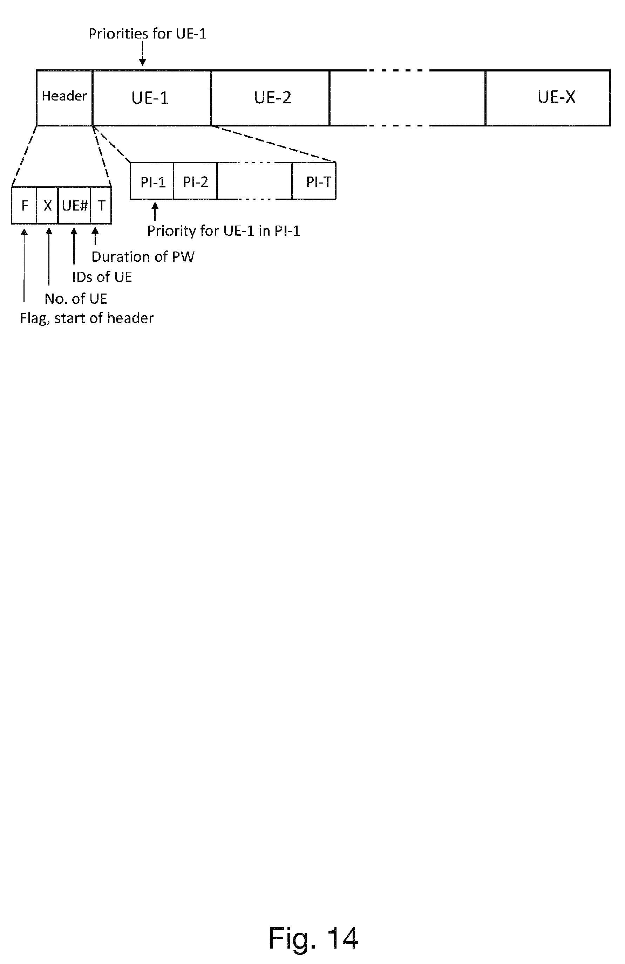

The BS-BS signaling of LIRA priorities is also carried out via the backhaul. This signaling procedure has two operation modes depending on whether LIRA is operating in a central or in a distributed scheme. In distributed operation, BS-BS signaling interfaces between the LIRA modules 24b of the cooperating BSs, and its purpose is to exchange the user priorities generated from the cooperating LIRA modules 24b. For centralized LIRA, as described above in detail, BS-BS signaling interfaces between the LIRA module 24b at the MBS 200 and the PS 24c of each BS 210, 220 in the cluster. Its purpose is to send the user priorities to the PS. The LIRA Priority Protocol Data Unit (LPPDU) is illustrated in Fig. 14. It can be seen that priorities are given for all the users that are predicted to associate with the BS during the prediction window T. The header of the LPPDU comprises a flag-field to indicate the start of the header, an X-field for the number of UEs, UE#-fields with the identifications of the UEs, and a T-field indicating the duration of the PW. There is one data field per UE, which provides the respective priorities per PI.

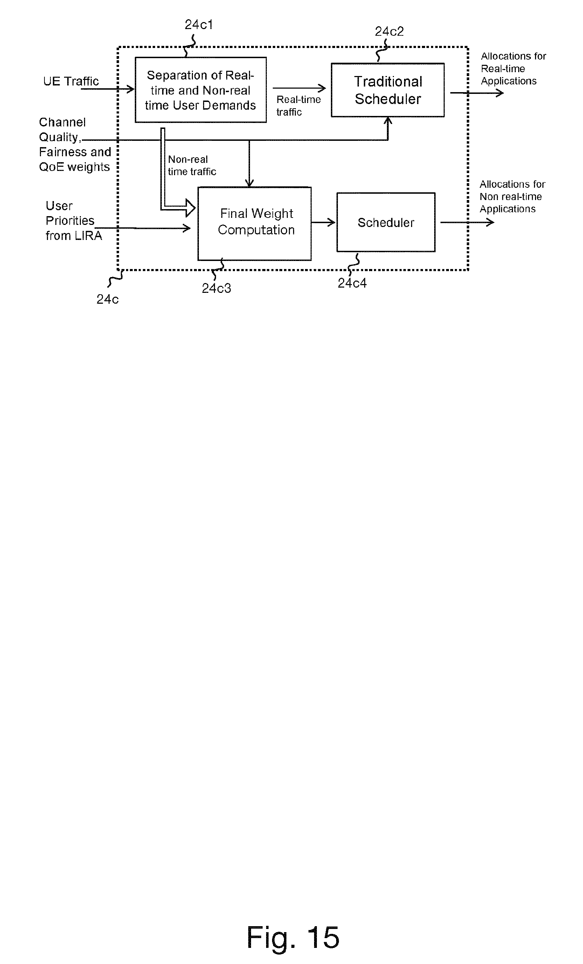

In the following LIRA integration with a predictive scheduler using Proportional Fair (PF) scheduling will be described. The embodiment of the predictive scheduler 24c is illustrated in Figure 15 and operates as follows. The embodiment of the predictive scheduler 24c comprises a module 24c1 for separation of real-time and non-real-time user demands from the UE traffic. The real-time traffic is then scheduled by a traditional scheduler 24c2. The non-real time traffic is scheduled based on priorities generated from LIRA, which are received in a final weight computation module 24c3 together with the separated non-real-time traffic. These priorities are combined with the channel quality, fairness and QoE weights, to derive a final weight for each user, which is then provided to the scheduler 24c4 for final resource assignments. A traditional scheduler 24c2 such as Proportional Fairness (PF) is used for the real-time traffic. Non-real time traffic is scheduled according to the user priorities generated from the LIRA. These priorities are combined with the channel quality, fairness measures and QoE weights, and a final weight is derived for each user, and provided to the scheduler 24c4 for resource assignments.

An embodiment that describes a weight computation scheme integrated with a PF scheduler will be provided subsequently. However, in embodiments LIRA can be integrated with different schedulers and under different weight combination procedures. PF scheduling exploits channel differences among UEs without ignoring fairness, and when combined with the LIRA weights it can incorporate network-wide long-term performance goals. The weight combination can be achieved as follows:

At each BS, the user priority $p_i(t_k)$ is obtained from the LIRA for the prediction interval $t_k$. Within the prediction interval $t_k$ there are several scheduling intervals $t_s$. For each $t_s$ the PF scheduling weight $w_i(t_s)$ is computed for each user. The final scheduling weight is calculated as:

$$sch_i(t_s) = w_i(t_s) + p_i(t_k) \qquad\qquad (2)$$

where the priority can be viewed as an average value added to the fluctuating PF weight. The user with the largest $sch_i(t_s)$ is scheduled. Additional scaling factors may be added in equation 2 to provide a trade-off between pure PF scheduling and pure LIRA based scheduling. In other embodiments, the PF scheduling weight can be evaluated in line with the above-described inter-cell PF scheduler, thus, the scheduling weights $w_i(t_s)$ for an arbitrary user i may be defined as

$$w_i(t_s) = \frac{r_i(t_s)}{R_{i,j}(t_s)}, \qquad\qquad (3)$$

where $r_i$ is the instantaneous rate of user i in the current cell and $R_{i,j}$ is the rate history, e.g., computed as a moving average, when user i joined the current cell from cell j. In other words, the rate history may span a time period, in which the user may change its cell association one or more times. Consequently, $R_{j,i}$ may include a rate history of the current and previous cells. Note that in some embodiments inter-cell PF scheduling can be performed in accordance with the above equation (3). In other embodiments inter-cell PF scheduling may be combined with LIRA, cf. the combination of equations (2) and (3). In some embodiments LIRA may be combined with intra-cell PF scheduling in line with equation (2) when taken alone.

Subsequently, the scheduler moves onto the next prediction interval and updates the user priorities (obtained from LIRA). Figure 6b, which was referred to earlier, illustrates a sample output of this weight combination procedure. This embodiment can be further extended to include frequency-selective scheduling, where several users are served simultaneously based on their weights for individual frequency sub-bands.

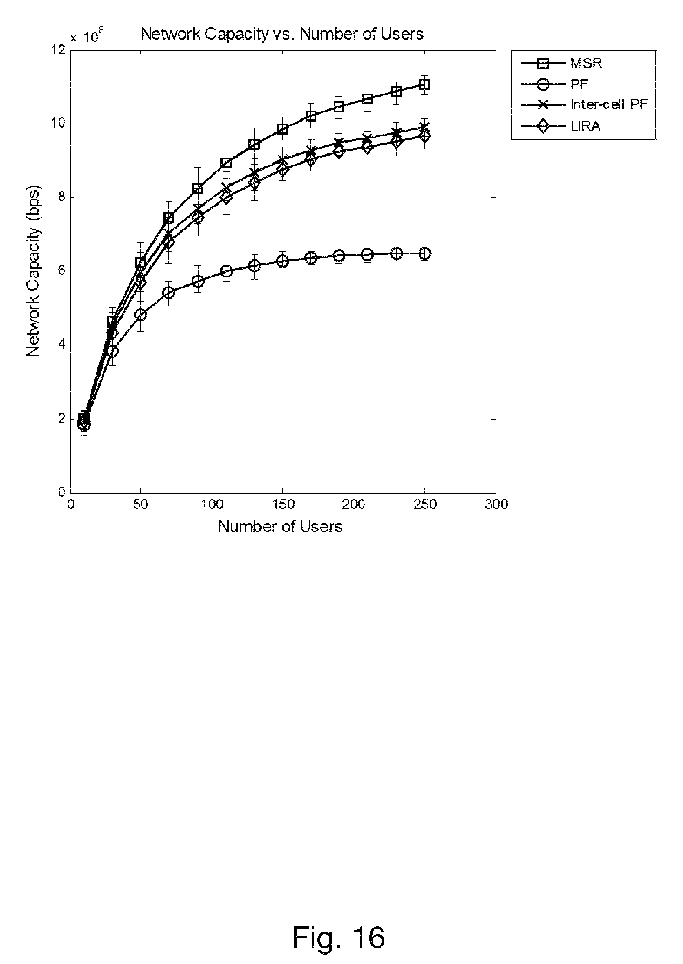

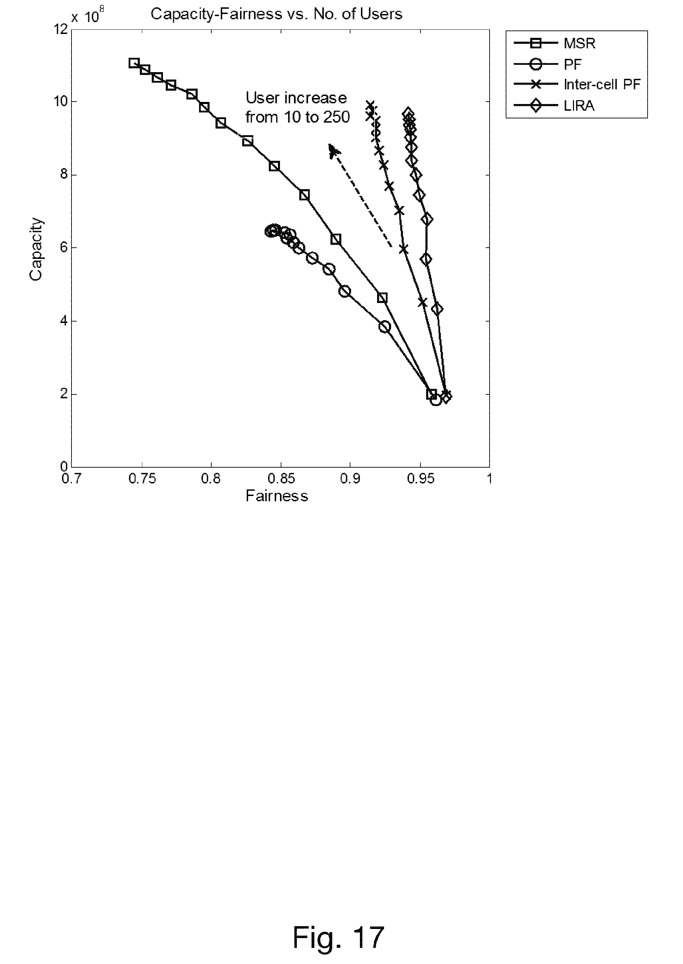

Figure 16 illustrates simulation results obtained for embodiments. The simulations were performed in a system with 19 cells, i.e. 2 tiers of hexagonal cells. The location of the UEs where selected randomly, they were assumed to move in random directions at a speed of 10m/s. The user traffic requests were full buffer, i.e. it was assumed that any user requests the same data amount. Thus the traffic demand linearly increases with the number of users. The LIRA prediction window was set to 300s. Figure 16 shows the network capacity in bits per second (bps) versus the number of users in the network for max-rate (MSR), PF, Inter-cell PF and LIRA scheduling. From Figure 16 it can be seen that the embodiments, i.e. inter-cell PF and LIRA, perform better than conventional PF. MSR leads to a higher performance, however, at degraded fairness figures, which are illustrated in Figure 17. Figure 17 shows a viewgraph of the capacity-fairness versus the number of users. It can be seen that although MSR provides the highest capacity it also provides the lowest fairness. It can also be seen that the embodiments, inter-cell PF and LIRA, provide the best trade-off between capacity and fairness.

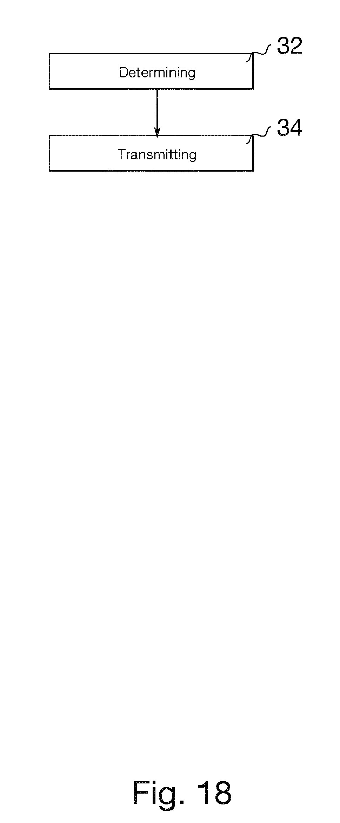

Figure 18 shows a flow chart of an embodiment of a method for a mobile transceiver 100 in a mobile communication system 500. The mobile communication 500 system further comprises a base station transceiver 200. The method comprises a step of determining 32 information on a data amount of a data service. The information refers to a time interval during which the mobile transceiver 100 communicates data associated with the data service to one or more base station transceivers. The method comprises a further step of transmitting 34 the information to the base station transceiver 200.

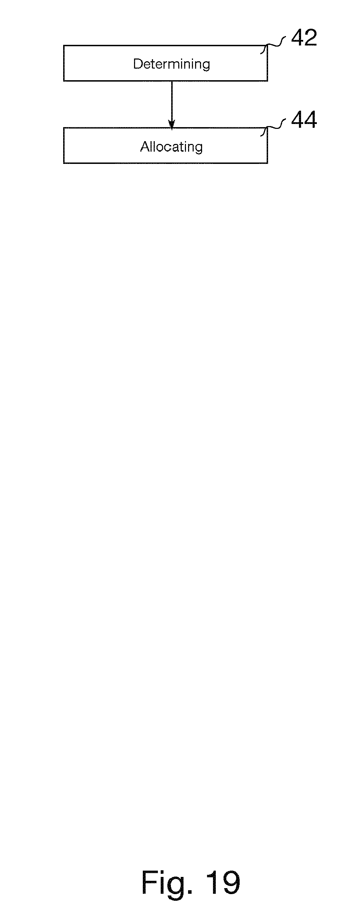

Figure 19 shows a flow chart of an embodiment of a method for a base station transceiver 200 in a mobile communication system 500. The mobile communication system 500 further comprises a mobile transceiver 100. The method comprises a step of determining 42 information on a data amount of a data service. The information refers to a time interval during which the mobile transceiver 100 communicates data associated with the data service to one or more base station transceivers. The method comprises a further step of allocating 44 radio resources to the mobile transceiver 100 based on the information.

Moreover, embodiments may provide a computer program having a program code for performing one of the above methods when the computer program is executed on a computer or processor.

Embodiments may exploit long-term predictions of user mobility and application demands to increase the spectral efficiency of the system and balance the load among multiple wireless cells. Embodiments may provide the advantage of high QoE for mobile users, such that poor service in one cell can be compensated by a better service in the upcoming cell. Embodiments may enable load balancing among cells and relieve an overloaded cell by shifting user demands to neighboring cells that the user will go to in the future. Furthermore, embodiments may increase the long-term spectral efficiency and provide only the channel resources the user needs for its QoE demands. Embodiments may include future demands in such allocations and, thus, increase the resource efficiency over a long time.

Moreover, embodiments may provide inter-cell fairness, i.e. fairness can be provided over multiple cells. Embodiments may be easily integrated into current RRM products via weight adjustment. For the user, these functionalities may maintain or improve the QoE even under heavy network load. For the operator, embodiments may offer a powerful tool to cope with the high traffic demands of new, mobile handhelds, e.g., tablets, webbooks, and smartphones.

Thus, the technical advantages of embodiments over existing intra-cell RRM, scheduling, OFDMA subcarrier allocation, and inter-cell RRM, hand over, CoMP scheduling, can be significant. The long-term resource allocation of embodiments may provide higher spectral efficiency as future time slots and predictions of user behavior, e.g. mobility, application demands, are included. Inter-cell resource allocation of embodiments may provide load balancing and fairness among cells without sacrificing QoE. Unlike current RRM schemes, embodiments can couple intra and inter-cell RRM at the scheduling level. This can highly improve the flexibility and efficiency of the resource allocation process as well as maintain the network-wide long-term QoE for the users.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for transmitting", "means for communicating", "means for allocating", etc., may be provided through the use of dedicated hardware, such as "a determiner", "an transmitter", "a communicator", "an allocator", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (10) for a mobile transceiver (100; 110; 120) in a mobile communication system (500), the mobile communication (500) system further comprising a base station transceiver (200; 210; 220), the apparatus (10) comprising
   means for determining (12, 12a, 12b) information on a data amount of a data service, the information referring to a time interval during which the mobile transceiver (100; 110; 120) communicates data associated with the data service to one or more base station transceivers; and
   means for transmitting (14) the information to the base station transceiver (200; 210; 220).

2. The apparatus (10) of claim 1, wherein the means for determining (12, 12a, 12b) is adapted to predict a future data demand and/or a future location of the mobile transceiver (100; 110; 120) and wherein the means for transmitting (14) is adapted to communicate information on the future data demand, and/or the future location to the base station transceiver (200; 210; 220), and/or wherein the means for determining (12, 12a, 12b) is adapted to provide a new prediction per prediction interval (610), and wherein the time interval refers to a prediction window (600), wherein the prediction window is longer than the prediction interval (610).

3. The apparatus (10) of claim 1, wherein the means for determining (12, 12a, 12b) is adapted to predict a future location of the mobile transceiver (100; 110; 120) in terms of one or more base station transceivers to which the mobile transceiver (100; 110; 120) will associate and/or wherein the means for determining (12, 12a, 12b) is adapted to base a prediction on stored information from the past and/or wherein the means for determining (12, 12a, 12b) is adapted to determine an average data rate during the time interval, wherein the mobile transceiver (100; 110; 120) is associated to two or more base station transceivers during the time interval and wherein the information on the data amount corresponds to the average data rate.

4. An apparatus (20) for a base station transceiver (200; 210; 220) in a mobile communication system (500), the mobile communication system (500) further comprising a mobile transceiver (100; 110; 120), the apparatus (20) comprising
   means for determining (22; 22a) information on a data amount of a data service, the information referring to a time interval during which the mobile transceiver (100; 110; 120) communicates data associated with the data service to one or more base station transceivers; and
   means for allocating (24; 24b; 24c) radio resources to the mobile transceiver (100; 110; 120) based on the information.

5. The apparatus (20) of claim 4, wherein the means for determining (22; 22a) is adapted to receive the information from the mobile transceiver (100; 110; 120) and/or from another base station transceiver (210) and/or wherein the information on the data amount corresponds to a future data demand of the mobile transceiver (100; 110; 120) and/or wherein the means for determining (22; 22a) is adapted to predict a future data demand of the mobile transceiver based on an application being executed on the mobile transceiver (100; 110; 120).

6. The apparatus (20) of claim 4, wherein the means for determining (22; 22a) is further adapted to receive information on a future location of the mobile transceiver (100; 110; 120) from the mobile transceiver (100; 110; 120) and wherein the means for allocating (24; 24b; 24c) is adapted to allocate the radio resources to the mobile transceiver (100; 110; 120) further based on the information on the future location and/or wherein the means for allocating (24; 24b; 24c) is adapted to allocate more radio resources to the mobile transceiver (100; 110; 120) when the future data demand will be higher than a serving capacity of another base station transceiver (210) at the future location than when the future data demand will be lower than a serving capacity of the other base station transceiver (210) at the future location.

7. The apparatus (20) of claim 4, wherein the information on the data amount corresponds to the average data rate of the mobile transceiver (100; 110; 120) during the time interval, wherein the mobile transceiver (100; 110; 120) is associated to two or more base station transceivers during the time interval and/or wherein the means for allocating (24; 24b; 24c) is adapted to allocate radio resources to the mobile transceiver (100; 110; 120) further based on a resource allocation history or the average data rate of the mobile transceiver (100; 110; 120).

8. The apparatus (20) of claim 4, further comprising means for communicating (26) the information on the data amount of the mobile transceiver (100; 110; 120) with another base station transceiver (210).

9. The apparatus (20) of claim 4, further comprising means for communicating (26) with another base station transceiver (210), wherein the means for communicating (26) is adapted to receive information on a future data demand of another mobile transceiver (110) from the other base station transceiver (210), and/or wherein the means for allocating (24; 24b; 24c) radio resources is adapted to determine an allocation of radio resources for the other mobile transceiver (110) based on the future data demand of the other mobile transceiver (110), and/or wherein the means for communicating (26) is adapted to transmit information on the allocation of radio resources for the other mobile transceiver (110) to the other base station transceiver (210).

10. The apparatus (20) of claim 4, further comprising means for communicating (26) with another base station transceiver (210), wherein the means for communicating (26) is adapted to receive information on an allocation of radio resources for the mobile transceiver (100; 110; 120) from the other base station transceiver (210), and/or wherein the means for allocating (24; 24b; 24c) radio resources is adapted to allocate the radio resources to the mobile transceiver (100; 110; 120) based on the information on the allocation of radio resources for the mobile transceiver (100; 110; 120) from the other base station transceiver (210).

11. The apparatus (20) of claim 4, wherein the means for allocating (24; 24b; 24c) is adapted to minimize a deviation between the future data demand and a future allocated data amount resulting from the radio resource allocations for a plurality of mobile transceivers within a prediction window.

12. A method for a mobile transceiver (100; 110; 120) in a mobile communication system (500), the mobile communication (500) system further comprising a base station transceiver (200; 210; 220), the method comprising
determining (32) information on a data amount of a data service, the information referring to a time interval during which the mobile transceiver (100; 110; 120) communicates data associated with the data service to one or more base station transceivers; and
transmitting (34) the information to the base station transceiver (200; 210; 220).

13. A method for a base station transceiver (200; 210; 220) in a mobile communication system (500), the mobile communication system (500) further comprising a mobile transceiver (100; 110; 120), the method comprising determining (42) information on a data amount of a data service, the information referring to a time interval during which the mobile transceiver (100; 110; 120) communicates data associated with the data service to one or more base station transceivers; and
allocating (44) radio resources to the mobile transceiver (100; 110; 120) based on the information.

14. A mobile communication system comprising a mobile transceiver (100; 110; 120) with an apparatus (10) according to claim 1 and/or a base station transceiver (200; 210; 220) with an apparatus (20) according to claim 4.

15. A computer program having a program code for performing one of the methods of claims 12, 13 or 14, when the computer program is executed on a computer or processor.

**Amended claims in accordance with Rule 137(2) EPC.**

1. An apparatus (10) for a mobile transceiver (100; 110; 120) for a mobile communication system (500), the mobile communication (500) system further comprising a base station transceiver (200; 210; 220), the apparatus (10) comprising

means for determining (12, 12a, 12b) information on a data amount of a data service, the information referring to a time interval during which the mobile transceiver (100; 110; 120) communicates data associated with the data service to one or more base station transceivers, the time interval being in the past, the future or extending from the past to the future; and
means for transmitting (14) the information to the base station transceiver (200; 210; 220).

2. The apparatus (10) of claim 1, wherein the means for determining (12, 12a, 12b) is adapted to predict a future data demand or a future location of the mobile transceiver (100; 110; 120) and wherein the means for transmitting (14) is adapted to communicate information on the future data demand or the future location to the base station transceiver (200; 210; 220), and wherein the means for determining (12, 12a, 12b) is adapted to provide a new prediction per prediction interval (610), and wherein the time interval refers to a prediction window (600), wherein the prediction window is longer than the prediction interval (610).

3. The apparatus (10) of claim 1, wherein the means for determining (12, 12a, 12b) is adapted to predict a future location of the mobile transceiver (100; 110; 120) in terms of one or more base station transceivers to which the mobile transceiver (100; 110; 120) will associate and wherein the means for determining (12, 12a, 12b) is adapted to base a prediction on stored information from the past, or wherein the means for determining (12, 12a, 12b) is adapted to determine an average data rate during the time interval, wherein the mobile transceiver (100; 110; 120) is associated to two or more base station transceivers during the time interval and wherein the information on the data amount corresponds to the average data rate.

**4.** An apparatus (20) for a base station transceiver (200; 210; 220) for a mobile communication system (500), the mobile communication system (500) further comprising a mobile transceiver (100; 110; 120), the apparatus (20) comprising

means for determining (22; 22a) information on a data amount of a data service, the information referring to a time interval during which the mobile transceiver (100; 110; 120) communicates data associated with the data service to one or more base station transceivers, the time interval being in the past, the future or extending from the past to the future; and

means for allocating (24; 24b; 24c) radio resources to the mobile transceiver (100; 110; 120) based on the information.

**5.** The apparatus (20) of claim 4, wherein the means for determining (22; 22a) is adapted to receive the information from the mobile transceiver (100; 110; 120) and from another base station transceiver (210) and wherein the information on the data amount corresponds to a future data demand of the mobile transceiver (100; 110; 120), or wherein the means for determining (22; 22a) is adapted to predict a future data demand of the mobile transceiver based on an application being executed on the mobile transceiver (100; 110; 120).

**6.** The apparatus (20) of claim 4, wherein the means for determining (22; 22a) is further adapted to receive information on a future location of the mobile transceiver (100; 110; 120) from the mobile transceiver (100; 110; 120) and wherein the means for allocating (24; 24b; 24c) is adapted to allocate the radio resources to the mobile transceiver (100; 110; 120) further based on the information on the future location and wherein the means for allocating (24; 24b; 24c) is adapted to allocate more radio resources to the mobile transceiver (100; 110; 120) when the future data demand will be higher than a serving capacity of another base station transceiver (210) at the future location than when the future data demand will be lower than a serving capacity of the other base station transceiver (210) at the future location.

**7.** The apparatus (20) of claim 4, wherein the information on the data amount corresponds to the average data rate of the mobile transceiver (100; 110; 120) during the time interval, wherein the mobile transceiver (100; 110; 120) is associated to two or more base station transceivers during the time interval and wherein the means for allocating (24; 24b; 24c) is adapted to allocate radio resources to the mobile transceiver (100; 110; 120) further based on a resource allocation history or the average data rate of the mobile transceiver (100; 110; 120).

**8.** The apparatus (20) of claim 4, further comprising means for communicating (26) the information on the data amount of the mobile transceiver (100; 110; 120) with another base station transceiver (210).

**9.** The apparatus (20) of claim 4, further comprising means for communicating (26) with another base station transceiver (210), wherein the means for communicating (26) is adapted to receive information on a future data demand of another mobile transceiver (110) from the other base station transceiver (210), and wherein the means for allocating (24; 24b; 24c) radio resources is adapted to determine an allocation of radio resources for the other mobile transceiver (110) based on the future data demand of the other mobile transceiver (110), and wherein the means for communicating (26) is adapted to transmit information on the allocation of radio resources for the other mobile transceiver (110) to the other base station transceiver (210).

**10.** The apparatus (20) of claim 4, further comprising means for communicating (26) with another base station transceiver (210), wherein the means for communicating (26) is adapted to receive information on an allocation of radio resources for the mobile transceiver (100; 110; 120) from the other base station transceiver (210), and wherein the means for allocating (24; 24b; 24c) radio resources is adapted to allocate the radio resources to the mobile transceiver (100; 110; 120) based on the information on the allocation of radio resources for the mobile transceiver (100; 110; 120) from the other base station transceiver (210).

**11.** The apparatus (20) of claim 4, wherein the means for allocating (24; 24b; 24c) is adapted to minimize a deviation between the future data demand and a future allocated data amount resulting from the radio resource allocations for a plurality of mobile transceivers within a prediction window.

**12.** A method for a mobile transceiver (100; 110; 120) for a mobile communication system (500), the mobile communication (500) system further comprising a base station transceiver (200; 210; 220), the method comprising determining (32) information on a data amount of a data service, the information referring to a time interval during which the mobile transceiver (100; 110; 120) communicates data associated with the data service to one or more base station transceivers, the time interval being in the past, the future or extending from the past to the future; and transmitting (34) the information to the base station transceiver (200; 210; 220).

**13.** A method for a base station transceiver (200; 210; 220) for a mobile communication system (500), the mobile communication system (500) further comprising a mobile transceiver (100; 110; 120), the method comprising determining (42) information on a data amount of a data service, the information referring to a time interval during which the mobile transceiver (100; 110; 120) communicates data associated with the data service to one or more base station transceivers, the time interval being in the past, the future or extending from the past to the future; and allocating (44) radio resources to the mobile transceiver (100; 110; 120) based on the information.

**14.** A mobile communication system comprising a mobile transceiver (100; 110; 120) with an apparatus (10) according to claim 1 or a base station transceiver (200; 210; 220) with an apparatus (20) according to claim 4.

**15.** A computer program having a program code for performing one of the methods of claims 12 or 13, when the computer program is executed on a computer or processor.

Fig. 1

Fig. 2

1. Prediction of User Location and Application Demands

2. Exchange of all UE info between BSs

3. Long-term RA decisions made at BSs

4. Signaling of Long-term RA decisions between BSs

5. RA implemented via Prediction Based Schedulers

110

210

100

120

220

200

500

Fig. 3a

predicted user
trajectory

110

210

200

120

220

500

Fig. 3b

Fig. 3c

Fig. 3d

Fig. 4

**1. User location and application demands are made for each prediction interval in the prediction window**

600

Prediction Window (PW)

620

610

**2. User priorities are assigned for each PI in the PW via the long-term, inter-cell resource allocator (LIRA).**

**3. The Predictive Scheduler (PS) performs actual user assignments during each SI based on: (a) the priorities from the LIRA and (b) additional parameters such as current channel conditions.**

# Fig. 5

Fig. 6a

Fig. 6b

**Fig. 7**

**Prediction Window (PW)**

**User-1**

App- 1

| 12 | 12 | 12 | 12 | 0 | 0 | 0 |

**Prediction Interval (PI)**

App- 2

| 0 | 0 | 0 | 10 | 10 | 0 | 0 |

# Fig. 8

Fig. 9

Fig. 10

Fig. 11

Application #1 Predictions

Location Predictions

| Header | AP-1 | AP-2 | | | LP |
|--------|------|------|--|--|----|

| PI-1 | PI-2 | | PI-T |
|------|------|--|------|

| PI-1 | PI-2 | | PI-T |
|------|------|--|------|

| F | #A | T |
|---|----|---|

Predicted Demand for PI-1

Predicted BS-ID for PI-1

Duration of PW

No. and type of applications

Flag, start of header

# Fig. 12

Predictions for UE-1

| Header | UPPDU-1 | UPPDU-2 | | UPPDU-X |

| Header | AP-1 | | LP |

| F | X | UE# |

IDs of UEs

No. of UE

Flag, start of header

# Fig. 13

Priorities for UE-1

| Header | UE-1 | UE-2 | ... | UE-X |

| F | X | UE# | T |

| PI-1 | PI-2 | ... | PI-T |

Priority for UE-1 in PI-1

Duration of PW

IDs of UE

No. of UE

Flag, start of header

# Fig. 14

Fig. 15

Fig. 16

Fig. 17

Fig. 18

42

| Determining |
|---|

44

| Allocating |
|---|

Fig. 19

Europäisches
Patentamt

European
Patent Office

Office européen
des brevets

## EUROPEAN SEARCH REPORT

Application Number

EP 11 30 6323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 703 665 A1 (NTT DOCOMO INC [JP]) 20 September 2006 (2006-09-20) * abstract * * paragraphs [0016] - [0022] * * paragraph [0029] * * paragraph [0044] * * paragraph [0096] * * paragraphs [0129] - [0142] * * paragraph [0169] * ----- | 1-15 | INV. H04W72/04 ADD. H04W72/12 |
| X | WO 00/07384 A1 (MOTOROLA INC [US]) 10 February 2000 (2000-02-10) * abstract * * page 2, line 24 - page 3, line 1 * * page 5, lines 7-32 * ----- | 1-15 | |
| A | EP 2 073 463 A1 (NOKIA SIEMENS NETWORKS SPA [IT]; NOKIA SIEMENS NETWORKS OY [FI]) 24 June 2009 (2009-06-24) * abstract * ----- | 1,2 | |
| A | GB 2 371 715 A (MOTOROLA INC [US]) 31 July 2002 (2002-07-31) * abstract * ----- | 2 | TECHNICAL FIELDS SEARCHED (IPC) H04W |
| A | US 2010/075665 A1 (NADER ALI [SE] ET AL) 25 March 2010 (2010-03-25) * abstract * ----- | 5 | |

The present search report has been drawn up for all claims

| Place of search | Date of completion of the search | Examiner |
|---|---|---|
| Munich | 15 March 2012 | Kahl, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 30 6323

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2012

| Patent document cited in search report | | | Publication date | Patent family member(s) | | | Publication date |
|---|---|---|---|---|---|---|---|
| EP 1703665 | A1 | | 20-09-2006 | CN | 1894893 | A | 10-01-2007 |
| | | | | EP | 1703665 | A1 | 20-09-2006 |
| | | | | US | 2008016213 | A1 | 17-01-2008 |
| | | | | WO | 2005060161 | A1 | 30-06-2005 |
| WO 0007384 | A1 | | 10-02-2000 | BR | 9912451 | A | 17-04-2001 |
| | | | | CN | 1311961 | A | 05-09-2001 |
| | | | | EP | 1101367 | A1 | 23-05-2001 |
| | | | | US | 6125278 | A | 26-09-2000 |
| | | | | WO | 0007384 | A1 | 10-02-2000 |
| EP 2073463 | A1 | | 24-06-2009 | NONE | | | |
| GB 2371715 | A | | 31-07-2002 | EP | 1360866 | A1 | 12-11-2003 |
| | | | | GB | 2371715 | A | 31-07-2002 |
| | | | | US | 2004043772 | A1 | 04-03-2004 |
| | | | | WO | 02074000 | A1 | 19-09-2002 |
| US 2010075665 | A1 | | 25-03-2010 | CN | 102160420 | A | 17-08-2011 |
| | | | | EP | 2327251 | A1 | 01-06-2011 |
| | | | | KR | 20110063678 | A | 13-06-2011 |
| | | | | US | 2010075665 | A1 | 25-03-2010 |
| | | | | WO | 2010031878 | A1 | 25-03-2010 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. MAIER ; F. SCHNEIDER ; A. FELDMANN.** A First Look at Mobile Hand-held Device Traffic. *Passive and Active Measurement, Lecture Notes in Computer Science,* 2010, vol. 6032, 161-170
- **U. PAUL ; A. P. SUBRAMANIAN ; M. M. BUDDHIKOT ; S. R. DAS.** Understanding traffic dynamics in cellular data networks. *INFOCOM, 2011 Proceedings IEEE,* April 2011, 882-890
- **Z. HAN ; K.J. RAY LIU.** Resource Allocation for Wireless Networks. Cambridge University Press, 2008
- **P. VISWANATH ; D.N.C. TSE ; R. LAROIA.** Opportunistic beamforming using dumb antennas. *IEEE Trans. Inform. Theory,* June 2002, vol. 48 (6), 1277-1294
- Coordinated Multi-Point in Mobile Communications: From Theory to Practice. Cambridge University Press, 2011

- **F. KELLY.** Charging and rate control for elastic traffic. *Euro. Trans. Telecomms.,* 1997, vol. 8, 33-37
- **W. PARK ; S. CHO ; S. BAHK.** Scheduler Design for Multiple Traffic Classes in OFDMA Networks. *Proc. IEEE Int. Conf. Communications,* 2006, vol. 2, 790-795
- **A. SANG ; X. WANG ; M. MADIHIAN ; R. D. GITLIN.** Coordinated load balancing, handoff/cell-site selection, and scheduling in multi-cell packet data systems. *Proc. MobiCom,* September 2004, 302-314
- **K. LAASONEN.** Route prediction from cellular data. *Proc. Workshop on Context Awareness for Proactive Systems (CAPS,* 2005, 147-158